# EUROPÄISCHE PATENTSCHRIFT

(11) **EP 3 325 750 B1**
(45) Veröffentlichungstag und Bekanntmachung des Hinweises auf die Patenterteilung: **07.04.2021**
(21) Anmeldenummer: 16751510.5
(22) Anmeldetag: 21.07.2016
(51) Int. Cl.: E05F 5/00, F16F 9/18, F16F 9/53, F16F 9/56, F16D 57/00, E05C 17/22, F16F 9/20

(54) **TÜRKOMPONENTE MIT EINER STEUERBAREN DÄMPFEREINRICHTUNG**
DOOR COMPONENT WITH A CONTROLLABLE DAMPER DEVICE
ÉLÉMENT DE PORTE MUNI D'UN DISPOSITIF AMORTISSEUR COMMANDABLE

(30) Priorität: 21.07.2015 DE 102015009449; 11.11.2015 DE 102015119505
(43) Veröffentlichungstag der Anmeldung: 30.05.2018
(73) Patentinhaber: Inventus Engineering GmbH, 6771 St. Anton i. M. (AT)
(72) Erfinder: BATTLOGG, Stefan, 6771 St. Anton i.M. (AT); MAYER, Markus, 6832 Sulz (Vorarlberg) (AT)
(74) Vertreter: BSB Patentanwälte Schütte & Engelen Partnerschaft mbB
(86) Internationale Anmeldenummer: PCT/EP2016/067475
(87) Internationale Veröffentlichungsnummer: WO 2017/013236

(56) Entgegenhaltungen:
- EP-A2- 2 703 686
- WO-A1-2004/001170
- CN-Y- 2 648 174
- DE-A1- 3 506 001
- JP-A- H0 814 308
- JP-A- S60 151 438
- JP-A- 2006 064 102
- US-A- 3 747 913
- US-A1- 2006 181 108
- US-A1- 2008 307 711
- US-A1- 2015 083 534

## Beschreibung

Die vorliegende Erfindung betrifft eine Türkomponente mit einer steuerbaren Dämpfereinrichtung insbesondere für ein Kraftfahrzeug und eine steuerbare Dämpfereinrichtung. Dabei umfasst die Türkomponente zwei relativ zueinander bewegbare Anschlusseinheiten, deren Relativbewegung zueinander durch wenigstens eine steuerbare Dämpfereinrichtung wenigstens abgebremst werden kann. Dabei ist eine der beiden Anschlusseinheiten mit einer Tragkonstruktion und die andere der beiden Anschlusseinheiten mit einer verschwenkbaren Türeinrichtung und insbesondere Fahrzeugtür verbindbar bzw. verbunden.

Im Stand der Technik sind verschiedenste Türkomponenten bekannt geworden, mit denen eine gezielte Dämpfung der Türbewegung und insbesondere auch ein gezieltes Fixieren der Tür in vorbestimmten Winkelstellungen möglich ist. Meist werden dazu mechanische Systeme eingesetzt, die kostengünstig sind und in zwei oder drei Winkelstellungen eine Feststellung der Tür eines Kraftfahrzeugs erlaubt. Dadurch kann der Benutzer die Tür in eine der Winkelstellungen bringen, die aufgrund der aktuellen Platzsituation geeignet erscheint und das Auto verlassen.

Nachteilig an diesem bekannten mechanischen Systemen ist allerdings, dass die Tür nur in einer gewissen Anzahl definierter Winkelstellungen fixiert ist. Wenn gerade weniger oder auch mehr Platz zur Verfügung steht, gibt es gegebenenfalls keine passende Einstellung.

Es sind auch aktive Systeme bekannt geworden, bei denen grundsätzlich in beliebigen Positionen die Tür abgebremst oder fixiert werden kann. Ein Nachteil von beispielsweise mit einer Spindel betätigten Systemen ist, dass diese relativ viel Zeit zum Öffnen oder Schließen der Türe benötigen. Es sind auch Systeme bekannt geworden, die beispielsweise über eine magnetorheologische Bremse verfügen und bei denen eine elektrische Spule ein Magnetfeld erzeugt, um die gewünschte Dämpfung zu erzielen. Ein Nachteil bei diesem System ist, dass bei der Dämpfung immer elektrische Energie benötigt wird, was beispielsweise bei einem längeren Aufenthalt auf beispielsweise einem Parkplatz mit geöffneter Tür einen erheblichen Energieverbrauch verursachen kann.

Es ist auch ein System bekannt geworden, bei dem über einen Permanentmagneten das zur Dämpfung erforderliche Magnetfeld erzeugt wird. Ein erheblicher Vorteil dieses Systems besteht darin, dass der Energieverbrauch gering ist. Nachteilig ist aber, dass beispielsweise bei einem Unfall und einem Ausfall der elektrischen Systeme die Tür nur mit sehr großer Kraft bewegt werden kann, da über den Permanentmagneten eine hohe Dämpfung erzeugt wird. Das kann gerade dann problematisch sein, wenn ältere Menschen oder Kinder im Auto sitzen und sie die Tür nur schwer oder gegebenenfalls gar nicht öffnen können.

Hydraulische Dämpfungssysteme, bei denen ein Kolben in einen Zylinder eintaucht weisen ein Ausgleichsvolumen für das eintauchende Kolbenstangenvolumen auf. Bei solchen Dämpfungssystemen ist meist ein Dämpfungszylinder vorgesehen, der durch einen mit der Kolbenstange verbundenen Kolben in zwei Teilräume getrennt wird. In dem Kolben ist ein (steuerbares) Dämpfungsventil vorgesehen. Die Kolbenstange bzw. der Dämpfungszylinder sind jeweils mit dem Fahrzeug bzw. der Tür verbunden. Zum Ausgleich für das Volumen der eintretenden oder austretenden Kolbenstange wird in dem Dämpfungszylinder über einen in dem Dämpfungszylinder hin und her bewegbaren Trennkolben ein Bereich in dem Zylinder abgetrennt. Der abgetrennte Bereich bildet das Ausgleichsvolumen und wird meist einem komprimierbaren Medium wie Luft gefüllt und unter einen solchen Überdruck gesetzt, dass ein vollständiges und problemloses Ein- und Ausfahren der Kolbenstange möglich ist. Durch das unter Überdruck stehende Ausgleichsvolumen entsteht aber auch der Effekt, dass das Dämpfungssystem in den ausgefahrenen Zustand vorbelastet wird, da der im Ausgleichsvolumen vorherrschende Überdruck auf den Kolben einwirkt und somit die Kolbenstange in den ausgefahrenen Zustand drückt. Die Vorbelastungskraft ergibt sich aus dem Produkt von wirkendem Überdruck und der Kolbenstangenfläche. Damit wird eine Tür eines Fahrzeugs z. B. in die geöffnete Stellung vorbelastet. Nach dem Öffnen des Türschlosses fährt die Tür ohne weitere Maßnahmen selbsttätig bis zum maximalen Öffnungswinkel aus. Beim Schließvorgang muss die Tür gegen diese Vorbelastungskraft bewegt werden. Ein solches Verhalten ist nicht immer gewünscht.

Die US 2006/0181108 A1 zeigt ein Öffnungssystem für eine Heccklappe eines Kraftfahrzeugkombis. Es wird eine Geschwindigkeit der Heckklappenbewegung ausgewertet und gesteuert.

Die US 2008/0307711 A1 offenbart ein Kraftfahrzeug mit einer Tür mit einer Haltefunktion. Die Tür wird in einer Position gehalten, bis ein Sensor das System freigibt.

Die DE 35 06 001 A1 offenbart eine Stoßdämpfereinrichtung mit einem einseitig offenen Zylinder in dem ein einseitig offener Rohrkolben aufgenommen ist. Darin ist ein Trennkolben angeordnet, der ein Gasvolumen abteilt.

Mit der US 3,747,193 ist ein Stoßdämpfer mit einer Fluidfeder bekannt geworden, in dem ein Gemisch aus Flüssigkeit und Gas vorhanden ist.

Die WO 2004/001170 A1 offenbart ein Türsteuersystem für ein Kraftfahrzeug mit einem Dämpfer, der eine Tür an einer beliebigen Öffnungsposition stoppen kann, um den Kontakt der Tür mit anderen Objekten verhindern zu können. Der Dämpfer umfasst eine Kolbeneinheit mit einer durchgehenden Kolbenstange. Dadurch wird kein Ausgleich für ein eintauchendes Kolbenstangenvolumen benötigt, da ein entsprechendes Kolbenstangenvolumen auf der anderen Seite austaucht. Dadurch wirkt praktisch keine Kraft auf den Kolben in die eine oder andere Richtung. Versuche mit einer solchen Prinzip bei Kraftfahrzeugtüren haben nicht zum gewünschten Ergebnis geführt. Die Haltbarkeit und Funktion waren nicht ausreichend.

Die EP 2 703 686 A2 betrifft eine Federgabel für Mountainbikes mit einer Dämpfereinrichtung, die einen Kolben am Ende einer Kolbenstange umfasst. Der Kolben teilt eine Dämpferkammer in zwei Kammern. Zum Ausgleich des eintauchenden Kolbenstangenvolumen ist ein Ausgleichsvolumen vorgesehen. Das Dämpfungsmedium fließt in einem Einwegkreislauf. Beim Einfedern und beim Ausfedern fließt das Dämpfungsmedium in die gleiche Richtung. Ein steuerbares Strömungsventil begrenzt den Durchfluss. Das Ausgleichsvolumen ist auf der Niederdruckseite angeordnet. Dadurch wirkt nur eine relativ kleine Kraft, die den Kolben aber dennoch in die ausgefahrene Stellung vorbelastet.

Es ist deshalb die Aufgabe der vorliegenden Erfindung, eine Türkomponente und ein Verfahren zur Verfügung zu stellen, womit eine wenigstens teilweise verbesserte Türkomponente insbesondere für ein Fahrzeug zu Verfügung gestellt werden kann. Eine weitere Aufgabe ist es, eine verbesserte Dämpfereinrichtung zur Verfügung zu stellen.

Diese Aufgabe wird gelöst durch eine Türkomponente mit den Merkmalen des Anspruchs 1 und durch eine Dämpfereinrichtung mit den Merkmalen des Anspruchs 12. Bevorzugte Weiterbildungen der Erfindung sind Gegenstand der Unteransprüche. Bevorzugte Merkmale, Weiterbildungen und Ausgestaltungen werden auch in der allgemeinen Beschreibung und der Beschreibung der Ausführungsbeispiele erläutert.

Eine erfindungsgemäße Türkomponente umfasst zwei relativ zueinander bewegbare Anschlusseinheiten und wenigstens eine steuerbare Dämpfereinrichtung, die ein magnetorheologisches Fluid als Arbeitsfluid enthält Dämpfereinrichtung. Dabei ist eine der beiden Anschlusseinheiten mit einer Tragkonstruktion und die andere der beiden Anschlusseinheiten mit einer bewegbaren und insbesondere verschwenkbaren Türeinrichtung insbesondere eines Fahrzeugs verbindbar. Eine Relativbewegung der der beiden Anschlusseinheiten zueinander kann mittels der Dämpfereinrichtung gedämpft werden, um eine Bewegung oder Schwenkbewegung der Türeinrichtung gesteuert zu dämpfen. Insbesondere wird die Bewegung wenigstens teilweise zwischen einer Schließstellung und einer zumeist maximalen Öffnungsstellung gedämpft. Vorzugsweise wird die Dämpfereinrichtung mit einer Steuereinrichtung gesteuert. Die magnetorheologische Dämpfereinrichtung umfasst eine Kolbeneinheit und eine die Kolbeneinheit umgebende Zylindereinheit die Kolbeneinheit teilt ein Zylindervolumen der Zylindereinheit in zwei Kammern. Dabei weist die Kolbeneinheit eine sich durch die erste Kammer erstreckende erste Kolbenstange und eine sich durch die zweite Kammer erstreckende zweite Kolbenstange auf. Die Dämpfereinrichtung umfasst wenigstens eine Ausgleichseinrichtung mit einem automatischen Schließventil.

Die erfindungsgemäße Türkomponente hat viele Vorteile. Diese Konstruktion erlaubt eine Ausgestaltung, bei der praktisch gar keine oder gegebenenfalls geringe Kräfte die Türeinrichtung in die eine oder die andere Richtung vorbelasten. Dadurch, dass sich durch die erste Kammer und durch die zweite Kammer jeweils eine Kolbenstange erstreckt, ist es möglich, dass bei einer Relativbewegung des Kolbens das Volumen der Kolbenstangen innerhalb der Zylindereinheit vollständig unverändert bleibt. Dann wirken dadurch fast keine oder sogar überhaupt keine Vorbelastungskräfte in die Öffnungs- oder Schließrichtung. Es ist aber auch über z. B. die Formgebung und die gewählten Durchmesser der beiden Kolbenstangen eine gezielte Vorbelastung einzustellen.

Die erfindungsgemäße Türkomponente ermöglicht, dass eine steuerbare gedämpfte Türeinrichtung praktisch drucklos in beide Richtungen bewegt werden kann.

Die beiden Kolbenstangen können separate Teile sein, die beide mit dem Kolben verbunden werden. Die beiden Kolbenstangen können aber auch beide jeweils Teil einer gemeinsamen durchgehenden Kolbenstange sein und bilden insofern zwei Kolbenstangenabschnitte einer durchgehenden Kolbenstange.

Bei einer Ausgestaltung mit zwei Kolbenstangen oder einer durchgehenden Kolbenstange (mit zwei Kolbenstangenabschnitten) werden die Kolbenstangen (bzw. Enden der Kolbenstange) an beiden Enden aus dem Zylindervolumen und/oder der Zylindereinheit nach außen geführt.

Wird beispielsweise eine durchgehende Kolbenstange verwendet, so ändert sich durch eine Relativbewegung der beiden Anschlusseinheiten zueinander das Volumen nicht und von daher muss keine Ausgleichseinrichtung oder ein Ausgleichsvolumen für das Volumen der Kolbenstange vorgesehen werden. Aber auch in solchen Fällen ist erfindungsgemäß ein (kleines) Ausgleichsvolumen vorgesehen und ist vorteilhaft, um beispielsweise einen Ausgleich bei schwankenden Temperaturen (Temperaturausgleich) zu Verfügung zu stellen. Ein solches Ausgleichsvolumen kann als Temperaturausgleichsvolumen bezeichnet werden. Das Ausgleichsvolumen ist insbesondere klein im Vergleich zu dem Volumen der Kolbenstange. Vorzugsweise umfasst die Ausgleichseinrichtung ein komprimierbares Ausgleichsvolumen. Ein solches Ausgleichsvolumen kann durch eine schwammartige Struktur eine Gummiblase oder einen abgeschlossenen und flexiblen Luftbehälter gebildet werden.

Das Ausgleichsvolumen der Ausgleichseinrichtung ist vorzugsweise kleiner als das Volumen der ersten Kolbenstange und der zweiten Kolbenstange (innerhalb) der Zylindereinheit. Insbesondere ist das Ausgleichsvolumen der Ausgleichseinrichtung kleiner als das Volumen der ersten Kolbenstange oder der zweiten Kolbenstange der Zylindereinheit. Es ist bevorzugt, dass das Ausgleichsvolumen der Ausgleichseinrichtung kleiner ist als 1/2 oder 1/3 oder 1/4 oder 1/6 oder 1/8 des Volumens der ersten Kolbenstange und/oder der zweiten Kolbenstange (innerhalb) der Zylindereinheit. Vorzugsweise ist das Ausgleichsvolumen der Ausgleichseinrichtung kleiner als das sich im Betrieb maximal innerhalb der Zylindereinheit befindende Volumen der ersten Kolbenstange oder der zweiten Kolbenstange.

Die Kolbenstangen sind am Austritt aus der Zylindereinheit und/oder der Dämpfereinrichtung jeweils gegenüber der Zylindereinheit bzw. der Dämpfereinrichtung abgedichtet.

Möglich ist es aber auch, dass eine der Kolbenstangen teleskopierbar ausgebildet ist und an einer Seite an dem Kolben befestigt und an der anderen Seite mit der Zylindereinheit fest verbunden ist. Die teleskopierbaren Teile der teleskopierbaren Kolbenstange sind insbesondere abgedichtet zueinander. Bei einer solchen Ausgestaltung ist ebenfalls kein Volumenausgleich für eine Eintauchen der Kolbenstange nötig. Ein Temperaturausgleich ist vorzugsweise vorgesehen.

Die Tür kann in beide Richtungen praktisch drucklos bewegt werden.

Gleichzeitig kann bedarfsweise über eine schnelle Verstellung des Magnetfeldes eine maximale Dämpfungskraft eingestellt werden, um Verletzungen an eingeklemmten Körperteilen zu vermeiden oder zu verringern.

Die Türkomponente kann in allen Ausgestaltungen zur Dämpfung einer Bewegung oder Schwenkbewegung der bewegbaren Türeinrichtung und insbesondere einer Tür zwischen der Schließstellung und einer beliebigen Öffnungsstellung dienen. Beispielsweise kann die Türkomponente mit der Dämpfereinrichtung die bewegbare Türeinrichtung über den gesamten möglichen Bewegungsbereich und insbesondere Schwenkbereich gesteuert dämpfen. Möglich ist es aber auch, dass eine Dämpfung einer Schwenkbewegung nur in bestimmten Winkelbereichen oder an bestimmten Winkelpunkten oder Positionen erfolgt.

Besonders bevorzugt ist die Türeinrichtung als Tür ausgeführt und ist schwenkbar an der Tragkonstruktion aufgenommen. In solchen Ausgestaltungen kann die Türeinrichtung als Tür bezeichnet werden. Es ist auch z. B. möglich, an einem Fahrzeug eine Heckklappe, einen Heckdeckel oder z. B. eine Motorhaube als Türeinrichtung während der Öffnungs- und/oder Schließbewegung gezielt zu dämpfen. Obwohl im folgenden in der Regel der Begriff "Tür" verwendet wird, so kann der Begriff auch durchgängig durch den Begriff "Türeinrichtung" oder durch "Klappe" oder "Deckel" ersetzt werden.

Möglich ist es auch, eine Schiebetür als bewegbare Türeinrichtung einzusetzen. Dann kann über einen Teil des Öffnungs- oder Schließweges oder über den ganzen Schiebeweg oder an definierten Punkten eine gezielte Dämpfung der Bewegung erfolgen.

Unter dem Begriff "dämpfen" ist hier eine Dämpfung einer Bewegung zu verstehen, die auch als Bremsen bezeichnet werden kann. Das bedeutet, dass die Dämpfereinrichtung auch als Bremseinrichtung bezeichnet werden kann. Die Dämpfung der Bewegung kann zu einer Fixierung der relativ zueinander bewegbaren Anschlusseinheiten und somit der bewegbaren oder verschwenkbaren Tür führen, sodass die Türeinrichtung in einer bestimmten Position/Winkelposition fixiert wird und von dort nur durch eine besonders große Kraft, die die maximale Kraft der Dämpfereinrichtung übersteigt, bewegt werden kann.

Vorzugsweise ist es möglich, die Bewegung der Anschlusseinheiten zueinander über die Dämpfereinrichtung gesteuert zu blockieren. Vorzugsweise wird das Dämpfungsventil mit einer Steuereinrichtung gesteuert gedämpft. Insbesondere wird die Bewegung der Türeinrichtung mit einer Steuereinrichtung gesteuert gedämpft.

In allen Ausgestaltungen ist es bevorzugt, dass die erste und die zweite Kolbenstange jeweils den gleichen Durchmesser aufweisen. Möglich ist es aber auch, dass die beiden Kolbenstangen jeweils einen unterschiedlichen Durchmesser und/oder eine unterschiedliche Form aufweisen. Beispielsweise kann über ein entsprechendes Durchmesserverhältnis eine entsprechende Vorbelastungskraft zum Ein- oder Ausfahren eingestellt werden.

Vorzugsweise weist das Dämpfungsventil wenigstens einen von einer magnetorheologischen Flüssigkeit durchströmbaren Strömungskanal (oder mehrere Strömungskanäle) auf, wobei der Strömungskanal einem veränderbaren Magnetfeld aussetzbar ist. Dadurch ist der Strömungswiderstand des Strömungskanals und somit eine Dämpfung der Dämpfereinrichtung über das Magnetfeld in dem Strömungskanal beeinflussbar. Bei einem starken Magnetfeld wird eine stärkere Dämpfung erzielt als bei einem schwachen Magnetfeld.

Es ist bevorzugt, dass wenigstens eine der beiden Kolbenstangen als elektrische Anschlusseinheit dient. Dann ist es möglich, dass an der Kolbenstange wenigstens ein Anschlusskabel geführt wird. Möglich ist es auch, dass an oder in beiden Kolbenstangen Anschlusskabel geführt werden. Die Anschlusskabel oder das Anschlusskabel kann in oder an der Kolbenstange geführt werden. Möglich ist es, das über ein Kabel der benötigte elektrische Strom zugeführt wird und dass darauf moduliert Signale übertragen werden.

Es ist bevorzugt, dass wenigstens eine der beiden Kolbenstangen außerhalb der Zylindereinheit in einer mit wenigstens einem Schlitz ausgerüsteten Rohrteil oder Rohr verschiebbar aufgenommen ist. Dann ist es bevorzugt, dass in dem Schlitz das Anschlusskabel herausgeführt wird. Vorzugsweise ist das Rohrteil Bestandteil einer der Anschlusseinheiten oder fest damit verbunden. Die in dem Rohrteil geführte Kolbenstange wird so vor äußeren Einflüssen geschützt. Die in dem Rohrteil geführte Kolbenstange wird vorzugsweise im Betrieb (praktisch) nicht auf Druck oder Zug belastet. Die in dem Rohrteil geführte Kolbenstange ist nicht mit einer der Anschlusseinheiten fest verbunden. Fest verbunden mit einer der Anschlusseinheiten ist das Rohrteil. Mit der anderen der beiden Anschlusseinheiten ist die andere Kolbenstange (auf der anderen Seite) fest verbunden.

In einer bevorzugten Ausgestaltung weist die magnetorheologische Dämpfereinrichtung eine Kolbeneinheit und eine die Kolbeneinheit umgebende Zylindereinheit auf, wobei die Kolbeneinheit ein Zylindervolumen der Zylindereinheit in zwei Kammern teilt. Dabei ist die Kolbeneinheit mit einem ersten Einwegventil ausgerüstet. Bei dieser Ausgestaltung ist ein externes magnetorheologisches Dämpfungsventil vorgesehen welches außerhalb des Kolbens und insbesondere auch außerhalb der Zylindereinheit angeordnet ist. Die beiden Kammern sind dabei über einen externen und mit dem bzw. wenigstens einem steuerbaren magnetorheologischen Dämpfungsventil ausgerüsteten Rückkanal miteinander zu einem Einwegkreislauf verbunden, sodass das magnetorheologische Fluid beim Einfahren und Ausfahren der Kolbeneinheit in die gleiche Strömungsrichtung durch die Kolbeneinheit strömt. Das bedeutet, dass die gleiche Strömungsrichtung durch das erste Drosselventil und durch das Dämpfungsventil vorliegt.

Bei dieser Konstruktion ist auch wieder eine durchgehende Kolbenstange vorgesehen oder es führen zwei Kolbenstangen an den unterschiedlichen Seiten des Kolbens durch die Zylindereinheit. Auch hier belasten nur geringe Kräfte oder gar keine Kräfte die Türeinrichtung in die eine oder die andere Richtung vor.

Es ist bevorzugt, dass eine erste Kammer der beiden Kammern mit dem Dämpfungsventil und das Dämpfungsventil über ein zweites Einwegventil in Strömungsverbindung mit der zweiten Kammer verbunden ist. Dabei kann die Strömungsverbindung jeweils mittelbar oder unmittelbar erfolgen. Das zweite Einwegventil erlaubt vorzugsweise nur Strömung in die zweite Kammer hinein. Durch das erste Einwegventil wird nur eine Strömung von der zweiten Kammer durch den Kolben in die erste Kammer erlaubt.

In allen Ausgestaltungen ist es bevorzugt, dass das Dämpfungsventil seinen eingestellten Zustand stromlos hält, um über eine elektrische Einstellung des Dämpfungsventils eine Dämpfungseigenschaft der Dämpfereinrichtung bedarfsweise dauerhaft einzustellen.

Ein besonderer Vorteil besteht dann darin, dass das Dämpfungsventil seinen eingestellten Zustand auch dann beibehält, wenn es stromlos geschaltet wird. Unter dem Begriff "stromlos" im Sinne der vorliegenden Erfindung ist ein Zustand zu verstehen, bei dem das Dämpfungsventil und gegebenenfalls auch die Dämpfereinrichtung weitgehend oder weitestgehend oder vollständig stromlos ist. Zur Aufrechterhaltung der Steuerungsfunktion und gegebenenfalls zur Aufnahme von Sensordaten kann aber weiterhin ein - sehr geringer - Strombedarf bestehen. "Stromlos" im Sinne der vorliegenden Erfindung bedeutet deshalb, dass im Mittel nur ein äußerst geringer Bruchteil des normalen Strombedarfs des Dämpfungsventils benötigt wird. Unter einem stromlosen Zustand wird folglich ein Zustand des Dämpfungsventils verstanden, in dem das Dämpfungsventil selbst weniger als ein Prozent und insbesondere weniger als ein Promille oder weniger als 0,1 Promille des Strombedarfs benötigt, wenn es elektrisch verstellt wird. Besonders bevorzugt behält das Dämpfungsventil seinen eingestellten Zustand komplett stromlos.

Dadurch, dass die Dämpfereinrichtung wenigstens ein magnetorheologisches Dämpfungsventil umfasst, ergeben sich erhebliche Vorteile, da das magnetorheologische Dämpfungsventil in kürzester Zeit seinen Zustand ändern kann. Außerdem kann berührungslos, und ohne einen mechanischen Antrieb ein magnetisches Feld erzeugt werden, welches das magnetorheologische Dämpfungsventil beeinflusst und somit die Dämpfereigenschaft der Dämpfereinrichtung verstellt.

In allen Ausgestaltungen kann die Türkomponente beispielsweise als Fahrertür oder Beifahrertür oder sonstige Fahrzeugtür ausgeführt sein bzw. eine solche umfassen. Als "Tür" einer Türkomponente im Sinne der vorliegenden Erfindung wird aber auch eine verschwenkbare Klappe oder Haube wie ein vorderer oder hinterer Deckel des Fahrzeugs wie eine Heckklappe oder eine Motorhaube verstanden.

In bevorzugten Weiterbildungen wird das Magnetfeld durch eine wenigstens teilweise aus hartmagnetischem Material bestehende Magneteinrichtung dauerhaft erzeugt bzw. ist dadurch erzeugbar. Die Magneteinrichtung wirkt vorzugsweise (ohne äußere Steuerungseinflüsse) als Dauermagnet oder Permanentmagnet, der seine magnetischen Eigenschaften dauerhaft beibehält. Die Magnetisierung der Magneteinrichtung ist durch wenigstens einen magnetischen Impuls wenigstens einer elektrischen Spule dauerhaft veränderbar. Dadurch kann das hartmagnetische Material (im Rahmen seiner Materialeigenschaften) beliebig und insbesondere dauerhaft magnetisiert werden. Zur Magnetisierung reicht ein magnetischer Impuls einer elektrischen Spule von sehr kurzer Dauer. Der magnetische Impuls ist dabei vorzugsweise kürzer als 1 Sekunde und insbesondere kürzer als 50 ms und kürzer als 10 ms und kann noch erheblich kürzer werden. Das hartmagnetischem Material der Magneteinrichtung reagiert auf einen konzentrierten magnetischen Impuls praktisch sofort und ändert in Abhängigkeit von der Höhe und der Dauer des Impulses seine Magnetisierung insbesondere permanent. Jedenfalls behält die Magneteinrichtung die durch den Impuls eingestellten magnetischen Eigenschaften für einen Zeitraum bei, der länger als die Zeitdauer des Impulses beträgt. Insbesondere behält die Magneteinrichtung die durch den Impuls eingestellten magnetischen Eigenschaften für einen Zeitraum bei, der ein Vielfaches länger ist als der Impuls. Das Verhältnis ist vorzugsweise größer 2, größer 10 und insbesondere größer 1000. Soll die Magnetisierung der Magneteinrichtung rückgängig gemacht werden, so kann dies über ein mit der elektrischen Spule erzeugtes magnetisches Wechselfeld mit abnehmender Amplitude, oder durch einen gezielten Gegenimpuls erfolgen. Dadurch kann das hartmagnetischem Material wieder entmagnetisiert werden und kann anschließend wieder durch einen gezielten magnetischen Impuls beliebig magnetisiert werden.

Durch den Einsatz einer Magneteinrichtung die wenigstens teilweise aus einem hartmagnetischen Material besteht, kann so auch ohne Stromzufuhr dauerhaft ein bestimmtes Magnetfeld aufrechterhalten werden, welches die gewünschte Dämpfung der Dämpfereinrichtung zur Verfügung stellt.

Das bedeutet beispielsweise, dass bei einem Halt auf einem Parkplatz und einer länger geöffneten Türeinrichtung oder Tür ein entsprechender magnetischer Impuls erzeugt werden kann. Anschließend steht dauerhaft ohne weitere Stromzufuhr die gewünschte Dämpfung zur Verfügung. Es kann die Türeinrichtung (Tür) sogar in der gerade bestehenden Winkelstellung fixiert werden. Nach der Überführung in die Schließstellung kann durch ein entsprechendes magnetisches Wechselfeld die Magnetisierung "gelöscht" werden, sodass kein oder nur noch ein sehr geringes magnetisches Feld an dem Dämpfungsventil der Dämpfereinrichtung wirkt. Vorzugsweise wird die Magnetisierung der Magneteinrichtung nach erfolgten Schließvorgang immer auf einen minimalen oder sehr geringen Wert eingestellt. Das hat den erheblichen Vorteil, dass bei einem Unfall die (Fahrzeug-) Tür leichtgängig bleibt und einfach auch von Kindern oder alten Menschen geöffnet werden kann.

In allen Ausgestaltungen ist es bevorzugt, dass wenigstens eine Sensoreinrichtung zugeordnet ist, um ein Maß für eine (Winkel-) Stellung der verschwenkbaren Tür zu erfassen. Damit kann eine stellungsabhängige und insbesondere winkelabhängige oder winkeloptimierte Steuerung erfolgen. Es ist bevorzugt, dass die Sensoreinrichtung wenigstens ein Rad oder insbesondere Reibrad umfasst, mit welchem ein Maß für eine Relativbewegung der beiden Anschlusseinheiten zueinander erfassbar ist. Dabei liegt insbesondere das (Reib) Rad auf der Kolbenstange auf und wird durch die Längsbewegung der Kolbenstange bei der Relativbewegung der beiden Anschlusseinheiten zueinander in Rotation versetzt. Das Rad oder Reibrad ist vorzugsweise mit einem Drehgeber verbunden. Ein Vorteil dabei ist, dass eine rotative Wegmessung kostengünstiger ist als eine lineare Wegmessung. Über mehrere Umdrehungen kann der gleiche Sensor/Magnetring/Encoder genutzt werden.

Bei der Voraussetzung einer relativ hohe Auflösung kann eine lineare Wegmessung kostengünstiger umgesetzt werden. Es sind auch andere und z. B. nicht auf magnetischen Encodern basierende lineare Messsysteme bzw. Sensoreinrichtungen denkbar. Ein absolutes Wegmesssystem kann auch Vorteile bieten. Ein absolutes Wegmesssystem ist rotativ schwieriger aufzubauen, da es einen großen Raddurchmesser erfordert, da regelmäßig nur eine Umdrehung zulässig ist. Denkbar ist es auch, zwei (unterschiedlich große) Räder zu verwenden. Aus den beiden Einzelpositionen kann die absolute Position bestimmt werden.

Eine günstige Ausgestaltung und eine zuverlässige Erfüllung ermöglicht ein inkrementelles Wegmesssystem, das insbesondere mit zusätzlichen Positionsinformationen ergänzt wird. Vorteilhaft können z. B. Indexpulse an bestimmten Positionen sein. Das kann ein eigener Index z. B. kurz vor Hubende sein, aber auch schon ein in der Türeinrichtung oder Türe vorhandener Sensor (z. B. Türe geschlossen). Ein Vorteil dabei ist, dass ein "Verzählen" der Sensoreinrichtung nicht mehr kritisch ist, die Sensoreinrichtung findet wieder zu definierten Positionen zurück. Ein Verzählen wäre z. B. bei Schlupf möglich oder wenn z. B. bei offener Türeinrichtung bzw. Türe die Versorgung einbricht (Batteriewechsel.

In bevorzugten Weiterbildungen ist die Steuereinrichtung dazu eingerichtet und ausgebildet, das Dämpfungsventil in der Schließstellung der Türeinrichtung (Tür) auf eine stromlos wirkende geringe (bzw. geringere) Dämpfung einzustellen. Vorzugsweise ist die Steuereinrichtung dazu eingerichtet und ausgebildet, das Dämpfungsventil in einer Öffnungsstellung der Tür nach Ablauf einer vorgegebenen Zeitspanne auf eine stromlos wirkende starke (bzw. stärkere) Dämpfung einzustellen. Die stromlos wirkende geringe Dämpfung in der Schließstellung bietet erhebliche Sicherheitsvorteile. Die stromlos wirkende starke Dämpfung in einer Öffnungsstellung ist dann vorteilhaft, wenn der Benutzer die Türeinrichtung (Tür) lange geöffnet hält. Dann wird bei einem aktiven System ständig Energie benötigt, um die Dämpfung aufrechtzuerhalten. Mit der vorliegenden Erfindung wird nur ein einmaliger magnetischer Impuls benötigt, der anschließend für eine beliebig lange Dämpfung oder Fixierung der Tür sorgt.

Das bedeutet vorzugsweise, dass die Steuereinrichtung dazu eingerichtet und ausgebildet ist, die Dämpfereinrichtung bei geschlossenem Zustand der Tür, also in der Schließstellung, auf eine stromlos wirkende geringe (geringere) Betätigungskraft einzustellen. Insbesondere ist die Steuereinrichtung dazu eingerichtet und ausgebildet, die Dämpfereinrichtung bei geöffneter Tür nach Ablauf einer vorgegebenen Zeitspanne auf eine stromlos wirkende große (größere) Betätigungskraft einzustellen. Insbesondere wird bei geschlossener Tür die Dämpfereinrichtung bzw. das Dämpfungsventil stromlos und mit geringer Dämpfung eingestellt. Bei einer Bewegung der Tür wird regelmäßig eine geringe Dämpfung eingestellt, um dem Benutzer ein leichtgängiges Öffnen der Tür zu ermöglichen. Bei Verweilen der offenen Tür in einem bestimmten Zustand wird eine höhere Dämpfung über ein magnetischen Impuls und die Remanenz der Magneteinrichtung eingestellt.

Vorzugsweise ist die Steuereinrichtung dazu eingerichtet und ausgebildet, das Dämpfungsventil beim Bewegen der Tür auf eine stromlos wirkende geringe Dämpfung einzustellen.

In allen Ausgestaltungen ist es bevorzugt, dass das in dem Strömungskanal wirkende Magnetfeld mit einer elektrischen Spule modulierbar ist. Das bedeutet, dass beispielsweise bei einer länger geöffneten Tür ein permanent wirkendes Magnetfeld über einen magnetischen Impuls eingestellt werden kann. Wird nun die Tür von dem Benutzer zum Beispiel langsam in die Schließstellung überführt, so wird durch eine elektrische Spule ein gegenwirkendes Magnetfeld erzeugt, sodass das tatsächlich wirksame Magnetfeld in dem Dämpfungskanal des Dämpfungsventils verringert wird und somit die Tür leichtgängig verschwenkt werden kann.

Dabei ist es möglich, dass die elektrische Spule zu Modulierung des Magnetfeldes auch zur Erzeugung des magnetischen Impulses eingesetzt wird. Möglich ist es aber auch, dass wenigstens zwei elektrische Spulen eingesetzt werden, von denen eine beispielsweise zur Erzeugung eines magnetischen Impulses zur dauerhaften Magnetisierung verwendet wird. Die andere elektrische Spule kann dann beispielsweise zur Modulierung des Permanentmagneten eingesetzt werden.

Alternativ oder ergänzend ist es möglich, dass wenigstens ein mechanisch einstellbares Hydraulikventil als Dämpfungsventil vorgesehen ist. Beispielsweise kann ein motorisch einstellbares Hydraulikventil vorgesehen sein, welches über einen zugeordneten elektrischen Motor von einer geöffneten Stellung in eine teilweise oder vollständig geschlossene Stellung überführt werden kann. Auch mit einem solchen mechanisch einstellbaren Hydraulikventil kann stromlos eine geringe Dämpfung gehalten werden oder auch stromlos eine stärkere Dämpfung gehalten werden. Strom wird in diesem Fall nur benötigt, um das mechanisch einstellbare Hydraulikventil entsprechend entsprechend weit zu öffnen oder zu schließen.

In bevorzugten Weiterbildungen ist es möglich, dass das magnetorheologische Dämpfungsventil der Dämpfereinrichtung bedarfsweise elektrisch eingestellt wird und die eingestellten Dämpfungseigenschaften stromlos dauerhaft gehalten werden.

Das ist vorteilhaft, da dies Verfahren auf einfache Art und Weise eine zuverlässige Dämpfung mit geringem Energieeinsatz ermöglicht.

Vorzugsweise wird ein Maß für die Position/Winkelstellung der Türeinrichtung/Tür erfasst und die Dämpfereinrichtung wird in der Schließstellung der Tür auf eine stromlos geringe Dämpfung eingestellt. Vorzugsweise wird in der Öffnungsstellung die Dämpfereinrichtung auf eine stromlos wirkende hohe Dämpfung eingestellt, wenigstens, wenn sich die Tür über eine vorgegebene Zeitspanne nicht wesentlich bewegt hat.

In allen Ausgestaltungen ist es möglich, eine Schwenkbewegung der Tür wenigstens teilweise zwischen einer Schließstellung und einer Öffnungsstellung gesteuert zu dämpfen. Dabei kann ein Maß für eine Änderung der Bewegungsgeschwindigkeit der Türeinrichtung oder für eine Änderung der Drehgeschwindigkeit der Tür ermittelt und bei einer Änderung über einen vorbestimmten Grenzwert hinaus von einer derzeit eingestellten geringeren Dämpfung auf eine größere Dämpfung umgeschaltet werden.

Ein solches Verfahren hat viele Vorteile. Dieses Verfahren erlaubt einen sichereren Betrieb einer Türkomponente. Dabei wird unter der Änderungsgeschwindigkeit der Drehgeschwindigkeit die mathematische Ableitung der Drehgeschwindigkeit, also die Beschleunigung oder die Verzögerung verstanden. Das bedeutet, dass bei einer zu starken Änderung der Bewegungsgeschwindigkeit oder Drehgeschwindigkeit die Steuerung in das Dämpfungsverhalten der Dämpfereinrichtung eingreift. Dabei wird der mathematische Betrag der Änderungsgeschwindigkeit berücksichtigt. Die Grenzwerte für Verzögerung und Beschleunigung können gleich sein, sind vorzugsweise aber unterschiedlich.

Das ermöglicht, dass bei einer starken Verzögerung der Tür praktisch sofort eine größere Dämpfung eingestellt wird, um Schäden möglichst zu vermeiden oder wenigstens zu verringern oder zu minimieren. Wird beispielsweise eine Tür eines Kraftfahrzeugs durch einen Windstoß oder durch eine sonstige Aktion in Schließrichtung bewegt und befindet sich beispielsweise ein Bein oder eine Hand oder ein sonstiger Gegenstand auf dem Weg der Schließbewegung so trifft die Tür zunächst - ohne weitere Sensoren - gegen das Objekt und wird dabei unerwartet abgebremst. Das bedeutet, dass beispielsweise bei einer relativ hohen Drehgeschwindigkeit der Tür eine unerwartete Änderung der Drehgeschwindigkeit auftritt. Das bedeutet hier, dass die Änderungsgeschwindigkeit der Drehgeschwindigkeit einen vorbestimmten Grenzwert übersteigt. Die Erfindung ermöglicht nun, dass bei Erkennung eines solchen Vorgangs sofort eine höhere (und insbesondere maximale) Dämpfung eingestellt wird, sodass ein Schaden insgesamt vielleicht sogar vermieden oder doch wenigstens erheblich verringert werden kann.

Beispielsweise kann beim Öffnen der Tür die Tür mit dem flachen Blech gegen ein zum Beispiel stumpfes Hindernis prallen, was sofort die Drehgeschwindigkeit der Tür senkt. Da sich die Bleche in der Regel über einen geringen Bereich biegeelastisch verformen können, kann somit bei einer sofortigen Aktion ein Schaden gegebenenfalls vollständig vermieden werden.

Das bedeutet, dass die Verzögerung der Tür vorzugsweise ermittelt wird und dass eine Verzögerung der Drehgeschwindigkeit über einen vorbestimmten Grenzwert hinaus die Dämpfung von einem geringen Wert auf eine große Dämpfung umgeschaltet wird. Dazu wird insbesondere die Geschwindigkeit bzw. die Drehgeschwindigkeit der Tür überwacht.

In allen Ausgestaltungen kann beim Schließen zum Beispiel in allen Fällen bei Erreichen eines kleinen Winkels die Tür abgebremst werden, umso ein sanftes oder sattes Schließen zu erzielen. Ein solcher kleiner Winkel ist z.B. 15° oder 10° oder 5° oder 2,5°. Bei sensorischer Erkennung von Hindernissen kann im Vorfeld entsprechend abgebremst werden.

In bevorzugten Weiterbildungen wird die Dämpfung vorzugsweise auf einen im Wesentlichen maximalen Wert oder den maximalen Wert eingestellt, wenn die Änderungsgeschwindigkeit bzw. Verzögerung den vorbestimmten Grenzwert überschreitet.

Insbesondere wenn ein magnetorheologisches Dämpfungsventil der Dämpfereinrichtung eingesetzt wird, kann so eine sehr schnelle Reaktion des Systems erzielt werden. Magnetorheologische Dämpfereinrichtungen können innerhalb von wenigen Millisekunden ihre Einstellung vollständig ändern, sodass von einer minimalen Dämpfung bis zu einer maximalen Dämpfung nur ein Zeitraum von wenigen Millisekunden vergeht. Das bedeutet, dass bei tatsächlichen Schließbewegungen die Tür innerhalb von weniger als 5 mm und insbesondere weniger als 2 mm und vorzugsweise weniger als 1 mm und in vorteilhaften Ausgestaltungen in etwa 0,6 mm vollständig abgebremst werden kann. Bei derartig schnellen Bremsvorgängen können in vielen Fällen erhebliche Schäden vermieden werden, auch wenn der Benutzer beispielsweise Gebrauchsgegenstände oder auch Gegenstände wie Computer oder aber ein Körperteil wie seinen Finger, seine Hand oder andere Gliedmaßen an der Tür eingeklemmt.

Vorzugsweise wird die Dämpfung vergrößert, wenn sich die Tür wenigstens einer vorbestimmten Winkelposition nähert. Das kann beispielsweise eine vorbestimmte Öffnungsposition sein. Vorzugsweise wird die Dämpfung vergrößert, wenn sich die Tür der Schließstellung nähert. Beispielsweise kann bei einem bestimmten Winkelbetrag von 15°, 10° oder 5° die Dämpfung so weit verstärkt werden, dass eine kontinuierliche und graduelle Abbremsung erfolgt.

Vorzugsweise wird die Dämpfung so vergrößert, dass die Drehgeschwindigkeit der Tür bei einer Schließbewegung auf eine vorgegebene Schließgeschwindigkeit verringert wird. Die Schließgeschwindigkeit wird insbesondere so vorgegeben, dass ein sattes Schließen mit einer vorzugweise geringen Geräuschentwicklung durchgeführt wird.

In allen Ausgestaltungen ist es bevorzugt, dass wenigstens eine Lernfunktion integriert ist, mit der Schließgeschwindigkeiten bei Schließvorgängen ausgewertet werden. Damit wird vorzugsweise die vorgegebene Schließgeschwindigkeit angepasst, wenn sich herausstellt, dass bei vorhergehenden Schließvorgängen die Tür nicht mehr ausreichend schnell für einen Schließvorgang war. Die Schließgeschwindigkeit wird so eingestellt, dass eine gerade ausreichende Geschwindigkeit zuverlässig zur Schließung führt.

In bevorzugten Weiterbildungen wird die Dämpfung vorzugsweise vergrößert, wenn sich die Tür einer maximalen Öffnungsstellung nähert.

In allen Ausgestaltungen wird die Dämpfung vorzugsweise nur dann vergrößert, wenn die Drehgeschwindigkeit eine vorgegebene Drehgeschwindigkeit überschreitet. Dadurch kann beispielsweise vermieden werden, dass beim Schließvorgang die Dämpfung erhöht wird, obwohl der Benutzer die Tür mit der Hand führt.

In allen Ausgestaltungen ist es möglich, wenigstens einen Sensor zuzuordnen, der eine Berührung der Tür durch den Benutzer erkennt.

Die Vergrößerung der Dämpfung wird vorzugsweise nur dann ausgeführt, wenn die Drehgeschwindigkeit eine vorgegebene Drehgeschwindigkeit überschreitet. Dadurch können auch unnötige Aktionen vermieden werden, wie bei Messfehlern, Rauschen oder bei äußerst kleinen Geschwindigkeiten, die beispielsweise durch Schwingungen der Tür hervorgerufen werden. Beispielsweise muss bei einer Geschwindigkeit von 0,01 Grad/s oder einer Geschwindigkeit von 0,1 cm/s am Türgriff in der Regel keine Bremsung der Tür erfolgen.

In allen Ausgestaltungen wird vorzugsweise die Dämpfung vergrößert, wenn ein Hindernis in der Bewegungsbahn der Tür erkannt wird und eine Kollision der Tür mit dem Hindernis insbesondere unmittelbar bevorsteht. Eine entsprechende sanfte Abbremsung bis zu dem Hindernis ist bevorzugt. Zur automatischen Erkennung von Hindernissen werden vorzugsweise bekannte Sensoren eingesetzt. Insbesondere werden Sensoren auf Ultraschallbasis, auf Radarbasis und/oder optische oder akustische Sensoren verwendet.

Vorteilhafterweise wird die Dämpfereinrichtung derart gesteuert, dass die Drehgeschwindigkeit der Tür so verläuft, dass ein geräuscharmes Schließen der Tür erreicht wird und/oder dass ein bestimmter Öffnungswinkel ohne abrupte Geschwindigkeitsänderungen erreicht wird. Die Steuerung erfolgt insbesondere so, dass die gewünschten Funktionen (gewünschter Öffnungswinkel, Stehen vor einem Hindernis, Stillstand an Endanschlag) wie gewünscht erreicht werden. In Kombination mit dem schnellen Schalten von magnetorheologischen Dämpfungsventilen kann so erreicht werden, dass die Geschwindigkeit der Tür beispielsweise beim Schließvorgang schon kurz vor dem Schließen so gering wie möglich ist. Damit benötigt die Dämpfereinrichtung weniger Restenergie.

In weiteren bevorzugten Ausgestaltungen umfasst die Türkomponente wenigstens eine Sensoreinrichtung oder es ist wenigstens eine Sensoreinrichtung zugeordnet, um ein Maß für eine Winkelstellung der verschwenkbaren Tür zu erfassen. Die Steuereinrichtung ist dazu eingerichtet und ausgebildet, mit Sensordaten der Sensoreinrichtung einen Kennwert für eine Änderungsgeschwindigkeit der Drehgeschwindigkeit der Tür zu bestimmen und bei einer Änderungsgeschwindigkeit über einen vorhergehenden Grenzwert hinaus die Dämpfereinrichtung von einer geringeren Dämpfung auf eine größere Dämpfung umzuschalten.

In dieser Ausgestaltung und auch in allen anderen Ausgestaltungen kann die Dämpfereinrichtung auch als Bremseinrichtung oder als Feststelleinrichtung bezeichnet werden.

Vorzugsweise ist die Dämpfereinrichtung als magnetorheologische Dämpfereinrichtung ausgeführt und die Dämpfung ist insbesondere über ein veränderbares Magnetfeld einstellbar. Eine magnetorheologische Dämpfereinrichtung hat erhebliche Vorteile, da sie eine extrem schnelle Umschaltung der Dämpfung von geringen auf starke Werte und umgekehrt ermöglicht. Vorzugsweise beträgt die Zeitdauer zur Umschaltung von der geringeren zu der größeren Dämpfung weniger als 50 ms. Insbesondere ist eine Umschaltung von einer minimalen Dämpfung zu einer maximalen Dämpfung und umgekehrt in weniger als 20 ms und vorzugsweise in weniger als 10 ms und besonders bevorzugt in weniger als 5 ms erreichbar. Durch ein solches extrem schnelles System kann flexibel und in Echtzeit auf alle Anforderungen reagiert werden.

Besonders bevorzugt wird die Dämpfung auf einen im Wesentlichen maximalen Wert eingestellt, wenn die Änderungsgeschwindigkeit den vorbestimmten Grenzwert überschreitet.

Die Dämpfung kann abgeschaltet oder auf einen geringen Wert reduziert werden, wenn die Drehgeschwindigkeit auf 0 reduziert wurde. Dabei wird unter einer Geschwindigkeit von 0 auch eine extrem geringe Restgeschwindigkeit verstanden, die beispielsweise durch Schwingungen auftritt, sodass laufend und abwechselnd minimalste Geschwindigkeiten in die eine und die andere Drehrichtung auftauchen.

Vorzugsweise umfasst die Dämpfereinrichtung wenigstens einen von einer magnetorheologischen Flüssigkeit gefüllten und steuerbaren Strömungskanal, wobei der Strömungskanal einem veränderbaren Magnetfeld aussetzbar ist, sodass der Strömungswiderstand des Strömungskanals und somit eine Dämpfung der Dämpfereinrichtung über ein stärkeres Magnetfeld in dem Strömungskanal stärker und über ein schwächeres Magnetfeld schwächer einstellbar ist.In allen Ausgestaltungen ist es bevorzugt dass die Dämpfereinrichtung wenigstens eine Sensoreinrichtung umfasst, wobei insbesondere ein Teil der Sensoreinrichtung an der Kolbenstange befestigt ist oder damit zusammenwirkt. Bei einer solchen Sensoreinrichtung wird über eine Linearbewegung der Dämpfereinrichtung ein Maß für eine Bewegung der Türeinrichtung oder eine Schwenkbewegung der Tür erfasst. Da eine feste Zuordnung von Position/Winkel und Linearposition vorliegt, kann aus der absoluten Position der Kolbenstange relativ zur Zylindereinheit auf die Position/Schwenkposition der Türeinrichtung/Tür zurückgeschlossen werden. Entsprechend kann aus den Signalen der Sensoreinrichtung auf eine Bewegungsgeschwindigkeit der Türeinrichtung/Drehgeschwindigkeit der Tür geschlossen werden. Und aus den Signalen der Sensoreinrichtung kann auch auf eine Verzögerung der Beschleunigung der Türbewegung geschlossen werden. Als Sensor kann insbesondere ein Rad oder Reibrad eingesetzt werden, welches z. B. an der Kolbenstange anliegt und eine Relativbewegung der Kolbenstange erfasst. Ein solches Reibrad kann insbesondere durch das mit einem Schlitz ausgerüsteten Rohrteil an der Kolbenstange anliegen.

In allen zuvor beschriebenen Ausgestaltung ist es bevorzugt, dass die Türkomponente die Tür umfasst. Möglich ist es auch dass die Türkomponente die Tragkonstruktion umfasst.

Die Sensoreinrichtung erfasst vorzugsweise ein Maß für einen Schwenkwinkel der Tür und/oder ein Maß für Relativposition der Anschlusseinheiten zueinander.

In allen Ausgestaltungen ist es bevorzugt, dass wenigstens ein Lagesensor zugeordnet ist, der ein Maß für eine horizontale Ausrichtung bzw. ein Maß für eine Abweichung von der horizontalen Ausrichtung des Fahrzeugs erfasst. Dann kann die Steuereinrichtung in Abhängigkeit von der Abweichung von der horizontalen Ausrichtung die Dämpfung der Dämpfereinrichtung steuern. Beispielsweise ist es sinnvoll, eine geöffnete Tür anders zu dämpfen, wenn das Fahrzeug an einem steilen Hang steht und die Tür zuzufallen - oder bei anderer Orientierung des Fahrzeugs - aufzufallen droht.

In allen Ausgestaltungen ist es auch bevorzugt, wenigstens einen Lastsensor zur Erfassung einer auf die Tür aufgebrachten Last zuzuordnen. Mit einem solchen Lastsensor kann beispielsweise ein auf die Tür aufgebrachtes Biegemoment erfasst werden.

Bevorzugt ist es weiterhin, wenigstens einen Nahfeldsensor zuzuordnen oder die Signale eines Nahfeldsensors zu verwenden, um Hindernisse in der Umgebung zu erkennen.

In allen Ausgestaltungen ist es möglich, dass mittels der Steuereinrichtung ein virtuelles Raster erzeugt wird, sodass der Benutzer beim -Öffnen oder Schließen der Tür in bestimmten Winkelschritten beispielsweise 5° oder 10° oder sonstigen Wegschritten Rasterpunkte fühlt, während der Benutzer die Tür öffnet oder schließt.

Die Türkomponente bietet bei dem Punkt "Failsafe" erhebliche Vorteile. Ein wichtiger Punkt ist auch, dass das Fail-Safe-Verhalten so konfiguriert werden kann, dass die Türe im Falle eines Unfalles, einfach und mit wenig Kraft zu öffnen ist. Zum Öffnen sollte dabei lediglich die Grunddämpfung überwunden werden.

Bei konventionellen Systemen ist das ein Problem. Wird eine niedere Grundkraft stromlos erzeugt, so wird für die hohe Haltekraft (Dämpfkraft) viel Strom benötigt. Bei einem Unfall lässt sich die Tür so gut öffnen. Steht das Fahrzeug aber länger mit geöffneter Tür z.B. in der Hanglage, so wird zum Halten der Tür viel Strom benötigt. Steht das Fahrzeug über Nacht in diesem Zustand, so ist am Morgen die Batterie leer. Ein dauernder Verbraucher, mitunter auch noch 4 x (vier Türen), geht praktisch nicht. Viele Fahrzeuge schalten jetzt schon den Motor und die Verbraucher nach wenigen Minuten ab.

Wird hingegen die hohe Grundkraft stromlos erzeugt (z.B. über einen Permanentmagnet), so kann im Fall einen Unfalles die Tür nicht mehr geöffnet werden. Besonders wenn Kinder auf den Hintersitzen sitzen oder wenn Personen verletzt sind, müssen die Türen mit minimaler Kraft geöffnet werden können.

Eine Lösung wäre es, mit einem Permanentmagnet nicht die volle Dämpfkraft zu generieren, was wiederum bei Kindern bei einem Unfall (immer noch zu schwergängig) oder bei Schrägparklage (Haltekraft reicht nicht aus) kritisch werden kann.

Eine weitere Lösung wäre ein Stromspeicher, der die hohe Haltekraft nach dem Unfall reduziert. Ein Nachteil ist der hohe Preis. Ein weiterer Nachteil ist, dass auch damit nicht sicher gestellt werden kann, dass dieser nach einem Unfall noch richtig funktioniert bzw. den notwendigen Strom lange genug bereitstellen kann (er muss das Öffnen auch noch detektieren).

Die Erfindung bietet hier eine optimale Lösung.

Ein weiterer Vorteil ist, dass die Türe durch den Benutzer in jede beliebige Position bezüglich des Öffnungswinkels gebracht werden kann. Dies kann durch ein fortlaufendes Führen der Türe, durch den Benutzer, bis zum angestrebten Endwinkel oder durch ein Stoßen durch den Benutzer erfolgen.

Die Rastfunktion des Systems hält dann die Türe im entsprechenden Öffnungswinkel. Dabei spielt es keine Rolle, ob sich das Fahrzeug als Ganzes auf einer horizontalen- oder schiefen Ebene befindet. Der Benutzer hat jedoch die Möglichkeit, aus dieser Rastfunktion heraus die Türe anschließend weiter zu öffnen oder zu schließen. Eine denkbare Erweiterung der Rastfunktion beinhaltet, dass die Türe aus der Ruhelage der Rastfunktion heraus, in Öffnungsrichtung leichter wegbewegbar ist als in Schließrichtung (einseitig wirkender Aktor). Sowohl auf einer horizontalen- als auch auf einer schiefen Ebene. Im Allgemeinen bedarf es dazu der Erkennung des "Bedarfes" eines Öffnungs- oder Schließvorgang durch den Benutzer.

Es ist möglich:
o Wenn gegen die Türe gedrückt wird, ergibt sich ein spezifisches Lastmoment. Dies bewirkt je nach Ausprägung eine Bewegung der Türe. Diese kann mit Hilfe von geeigneten Sensoren (z.B. Weg, Geschwindigkeit, Beschleunigung) an geeigneten Stellen (am Aktor, am Drehpunkt der Türe, am Türgriff etc.) erkannt/gemessen werden. Wird dabei ein bestimmter Grenzwert überschritten, so wird/darf der Öffnungs- bzw. Schließvorgang eingeleitet werden.
∘ Befindet sich das Fahrzeug auf einer schiefen Ebene, so entstehen auf Grund der wirkenden Massen auf das dämpfende System erhöhte Lastmomente/Grundmomente in der Rastposition. Entsprechend wird das vorzugsweise berücksichtigt. Z.B. über eine Erhöhung der Schwellwerte für das Auslösen eines Öffnungs- oder Schließvorganges. Die adaptive Anpassung der Schwellwerte kann über die Information der Fahrzeugneigung erfolgen, welche einfach sensortechnisch erfasst werden kann.
∘ Eine weitere Möglichkeit, einen Öffnungs- oder Schließvorgang zu erkennen, sind Berührungs-, Abstandssensoren jeglicher Art an der Außen- und Innenschale der Türe (kapazitiver-, induktiver-, optischer Sensor, Sitzerkennungssensor (befindet sich der Benutzer auf dem Sitz oder nicht)). Damit kann bei Annäherung einer Hand oder eines Objektes oder bei der Berührung mit der Hand oder anderen Objekten festgestellt werden, ob ein Öffnungs- oder Schließvorgang erlaubt werden soll.

Außerdem kann die Verarbeitung der Informationen in Nahfelderkennungssystemen erfolgen.

Sämtliche oben genannten Informationen sind auch dahingehend verwendbar, dass erkannt werden soll, ob der Benutzer die Türe als Ausstiegshilfe verwenden will. Auch hier spielt es eine entscheidende Rolle ob sich das Fahrzeug auf einer horizontalen- oder schiefen Ebene befindet. Das kann entsprechend den oben genannten Methoden berücksichtigt werden.

Vorzugsweise wird ein sanftes Öffnen und Schließen der Türe ermöglicht.

Die Rastfunktion kann genutzt werden, sodass, wenn die Türe durch den Benutzer aufgestoßen oder zugestoßen oder geführt in eine der beiden Richtungen bewegt wird, stets ein sanftes Hinbewegen zum angestrebten Türwinkel erfolgt. Beim Schließen der Türe bspw. würde die Türe immer sanft an einem definierten Öffnungswinkel zu stehen kommen. Wobei beim Schließen, dann später mechanische oder elektromechanische Komponenten das finale Schließen und Fixieren der Türe übernehmen. Ebenso beim Öffnen der Türe; unabhängig vom Impuls/dem Kraftstoß/der Anfangsgeschwindigkeit/ der Führungskraft, welche die Türe erfährt, erfolgt stets ein sanftes Öffnen hin zum gewünschten Öffnungswinkel.

Beim gewünschten Öffnungswinkel kann es sich dabei um
- den maximalen Öffnungswinkel handeln. Dabei wird durch den ständig unter allen Umständen gewährleisteten sanften Öffnungsvorgang neben dem Komfort weiter gewährleistet, dass das maximal herrschende Moment beim maximalen Öffnungswinkel derart begrenzt wird, dass eine plastische Verformung oder grundlegende Überbeanspruchung der AB-Säule vermieden werden kann. Sowohl für Lastfälle, in denen sich das Fahrzeug auf einer horizontalen als auch auf einer schiefen Ebene befindet.
- jeglichen Winkel innerhalb des Arbeitsbereiches handeln.

Dieser kann variieren auf Grund von
- manuellen Benutzerdefinitionen oder
- automatisierten funktionellen Erweiterungen wie bspw. im nächsten Aufzählungspunkt beschrieben.

Weiter kann durch ein sanftes Öffnen oder Schließen der Türe der Verschleiß minimiert werden; durch Minimieren von Lastspitzen oder durch Vermeidung von verschleißsteigernden Arbeitsbereichen.

Es ist möglich, einen virtuellen Anschlag auf Grund von Hindernissen im Arbeitsbereich (möglicher maximaler Öffnungswinkel der Türe) zur Verfügung zu stellen:
Mit Hilfe von geeigneter Sensorik oder aus Informationen der Nahfelderkennung kann erkannt werden, ob sich ein Hindernis im Arbeitsbereich der Türe befindet. Für die Nahfelderkennung können dabei bspw. Kamerasysteme (unter der Türschwelle oder Top-View) oder ähnliche Systeme verwendet werden; zudem bspw. Abstandssensoren etc. Auf Grund jener Information kann ein virtueller Anschlag umgesetzt werden. Dabei wird der maximal erlaubte Öffnungswinkel auf Grund der oben genannten Information aus der Platzierung des Störobjektes berechnet/definiert. Auf Basis des neuen maximal möglichen Öffnungswinkels, werden die oben (in allen vorigen Punkten) beschrieben Funktionen mit reduziertem Öffnungswinkel umgesetzt. Dabei ist auch denkbar, dass neben dem maximal möglichen Öffnungswinkel ein Sicherheitsabstand berücksichtigt wird. Weiter kann (muss aber nicht) nach Erreichung des Sicherheitsabstandes zum störenden Objekt eine Rasterfunktion jeglicher Ausprägung/Granularität hinterlegt werden, mit welcher eine feine stufenweise Annäherung bis unmittelbar hin zum störenden Objekt ermöglicht wird.

Umsetzbar ist auch eine Blockierfunktion, welche eingreift, wenn sich Objekte aller Art dem Arbeitsbereich der Türe nähern (bspw. herannahender Fahrradfahrer), bevor diese geöffnet wird/werden will. Die Information kann auf Basis geeigneter Sensorik bzw. auf Basis der Informationen der Nahfelderkennung generiert werden. Das System verarbeitet diese Information derart, dass ein Öffnen der Türe auf Grund der adaptiven Dämpfung vermieden wird.

Ein weiterer Vorteil der Umsetzung mit MRF-Aktoren ist, dass auf Grund der Adaptivität auf Umwelteinflüsse sämtlicher Ausprägungen reagiert werden kann:
∘ Verschleißerscheinungen im System (z.B. erhöhte Türreibung mit steigendem Alter, etc.).
∘ Es kann auch die Temperaturabhängigkeit der Türreibung kompensiert werden. So kann die Temperatur in den Türlagerstellen berücksichtigt werden.
∘ Äußere Einflüsse können kompensiert werden. So kann einwirkender Wind kompensiert werden. Es kann z. B. auch eine Schneelast auf der Heckklappe kompensiert werden.
∘ Beladung (wenn mehrere Leute im Fahrzeug sitzen funktioniert die Entlüftung vom Innenraum nicht mehr so gut.
∘ Fenster offen oder zu: bei geöffneten Fenstern lassen sich die Türen leichter schließen.
∘ Fahrzeugentlüftung: altersbedingt kann diese verstopfen, wodurch das Schließen der Türen schwerer geht.
∘ Fahrzeug befindet sich in einer schiefen Ebene (erhöhte Kräfte auf Grund der beteiligten Massen)
∘ Störgrößen im Allgemeinen, in welcher Ausprägung auch immer

Auf Grund aller oben genannten Einflüsse verändert sich das Verhalten des Systems gegenüber dem Grundzustand/mit dem Alter/mit der Zeit/auf Grund temporärer Umstände (z.B. schiefe Ebene). Allenfalls können aber diese Einflüsse erfasst und berücksichtigt werden.

Die Erfassung erfolgt über (intelligente) Algorithmen welche das Systemverhalten beobachten; in Kombination mit geeigneter Sensorik. Die Regelungsstrategien - sowie in allen Punkten oben beschrieben - können derart angepasst werden, dass das Systemverhalten als Ganzes immer gleich bleibt; respektive sich für den Benutzer immer gleichbleibend anfühlt.

Idealerweise schließt die Tür immer sanft und mit einem satten Geräusch. Hierzu wird die Verfahrgeschwindigkeit entsprechend geregelt. Ändern sich z.B. die Türdichtungen (quillen auf...), das Auto ist verzogen (nach einem Unfall oder ein Rad steht auf dem Gehsteig), das Scharnier hat kurz vor der Schließstellung eine erhöhte Reibung, änderst sich die notwendige Schließkraft (sie wird höher).

Mit der Möglichkeit der adaptiven Anpassung der Dämpfung ergeben sich eine Vielzahl an Möglichkeiten zur Steigerung des Komforts oder der Steigerung der Performance, etc.:
∘ Mittels geeigneter Sensorik oder auf Basis der Informationen der Nahfelderkennung, oder bspw. durch einen Sensor im Schlüssel mit Personeninformation oder durch im Fahrzeug befindliche Kameras kann bspw. erkannt werden, welcher Fahrer sich als Benutzer am System befindet. Damit kann die Ausprägung sämtlicher oben beschriebenen Funktionalitäten an den aktuellen Benutzer angepasst werden (z.B. adaptive Anpassung des Momentes zur Erkennung des "Bedarfes" eines Öffnungs- oder Schließvorganges; bspw. Unterscheidung Mann/Frau).
∘ Weiter kann softwaretechnisch, auf Basis der Anpassung von Systemparametern der Regelung, adaptiv auf sämtliche Gegebenheiten reagiert werden ohne im Betrieb oder in der Fertigung irgendwelche mechanischen Anpassungen durchführen zu müssen
   - Vordertüre / Hintertüre
   - Unterschiedliches Fahrzeugmodell

Mit einer einfachen Konfiguration des Systems kann erreicht werden, dass z.B. beide Hintertüren während der Fahrt, oder auch im Stillstand, nicht geöffnet werden dürfen. Dies kann auch dynamisch abhängig davon erfolgen, was für Benutzer sich auf der Rückbank befinden. Diese kann mittels geeigneter Sensorik oder auf Basis der Informationen der Nahfelderkennung oder bspw. durch einen Sensor im Schlüssel mit Personeninformation oder durch im Fahrzeug befindliche Kameras erkannt werden.

Im Allgemeinen kann das Öffnen der Türen während des Fahrens verhindert werden, oder nur unter bestimmten Fahrzeuggeschwindigkeiten erlaubt oder erschwert erlaubt werden.

Oder falls die Türe unter dem Fahren geöffnet wird, kann eine geeignete Dämpfungsmaßnahme eingeleitet werden (z.B. Blockieren der Türe gegen Rückschlagen nach dem Abbremsvorgang).

Diebstahlschutz: Vorige Funktionen können auch als Diebstahlschutz verwendet werden (ein ungewünschtes Ein- und Aussteigen ist nicht mehr möglich). Vorteil hierbei auch: Es können so auch keine Gegenstände aus dem Fahrzeug entwendet werden (nur durch Einschlagen der Scheiben).

Im Falle des Detektierens von nicht spezifizierbaren Hindernissen im Arbeitsbereich (z.B. leichter Schnee) aus der allgemeinen Sensorik oder aus Informationen der Nahfelderkennung, soll das System bspw. ein angepasstes Öffnen der Türe zur Verfügung stellen. Im Falle derartiger Unsicherheiten, könnte das System bspw. von Beginn an des Öffnungsvorganges eine feingranulare Rasterfunktion zur Verfügung stellen. Somit erfährt der Benutzer über das automatisch generierte haptische Feedback die Rückmeldung, dass sich nicht zuordenbare (nur bedingt schädigende) Hindernisse im Arbeitsbereich befinden.

Weiter kann neben einem maximalen Öffnungswinkel auf Grund von Hindernissen im Arbeitsbereich für den Öffnungsvorgang der Türe, ebenso ein maximaler Schließwinkel auf Grund von Hindernissen im Arbeitsbereich für den Schließvorgang berücksichtigt werden (virtueller Endanschlag beim Schließen). Somit können neben Sachschäden am Fahrzeug (auf Grund von Hindernissen wie bspw. Getränkekisten) während des Schließvorganges auch Personenschäden vermieden werden; bspw. einklemmen von Fingern oder Händen. Im Allgemeinen wird jedoch ein schmerzhaftes/schadenbringendes Einklemmen von bspw. Fingern/Händen bereits durch die Komfortfunktion des sanften Schließens unterstützt. Da diese Funktion die Türe bereits in allen Fällen mit wenig Restenergie (Restgeschwindigkeit) vor der Rastfunktion zum Stehen bringt.

Einklemmschutz: Hier kann ein Algorithmus bzw. eine Regelung bei einer unüblichen Geschwindigkeitsreduktion kurz vor der geschlossenen Türstellung schlagartig einen hohen Strom auf den Aktor geben, sodass dieser Türe insbesondere so schnell/stark wie möglich gebremst wird. Die schnelle Reaktionszeit des Aktors hilft dabei sehr. Bei 0,5m/sec Verfahrgeschwindigkeit ergeben sich 0,5mm/ms und somit kommt bei einer Reaktionszeit von 6ms die Türkomponente innerhalb von 3mm zum Stillstand.

Schadensminimierung: Die Sensorik erkennt kein Hindernis und die Tür soll ungehindert öffnen. Der Wegsensor überwacht das Öffnen und stellt eine untypisches Verfahren fest (z.B. starkes Abbremsen wegen einem nicht erkannten Hindernis wie ein niederer Pfosten in der Mitte der Tür). Der "MRF Notstop" bremst voll (wie zuvor beschrieben beim "Einklemmschutz"; 0,1m/sec Verfahrgeschwindigkeit = 0,1mm/ms = bei 6ms ergibt 0,6mm bis zum Stillstand) und reduziert aufgrund der sehr schnellen Reaktionszeit so den Schaden (evtl. wird das Blech dadurch nur elastisch verformt...).

Auch wichtig bei Schnee, Sträuchern, Ästen..., also schwer detektierbaren Hindernissen.

Diverse Gegebenheiten von Umgebungseinflüssen können berücksichtigt werden. Bspw. kann der Fall zu Stande kommen, dass sich während der Abwesenheit des Benutzers im Fahrzeug, ein weiteres Fahrzeug neben das eigene parkt, welches beim Verlassen noch nicht anwesend war. In diesem Fall sollte gewährleistet werden, dass die allgemeine Sensorik oder die Informationen der Nahfelderkennung vor dem Öffnen der Türe, den maximalen Öffnungswinkel rechtzeitig an das SDS-System übergeben. Wird dieser Wert vor dem Öffnen der Türe nicht angepasst (wird bspw. der letzte Wert vor dem Verlassen des Fahrzeuges verwendet), so kann ein Schaden, welcher Art auch immer, entstehen. Deshalb wird es nötig sein, Konzepte zu finden, welche derartige Information fortlaufend (auch im "Nicht-Betrieb" des Fahrzeuges) aktualisieren. Das kann bspw. über eine reduzierte Bearbeitung (zur Energiebedarfsreduzierung) der entsprechenden Sensorik und/oder Algorithmen und/oder Nahfelderkennungssysteme in Form einer Stand-By-Funktion erfolgen. Allenfalls ist es bevorzugt, dass es vor dem erstmaligen Betätigen der Türe erfolgt; die Vorlaufzeit hängt dabei ab von der Performance der Algorithmen/Sensorik, welche den maximalen Öffnungswinkel ermitteln/messen. Es ist bevorzugt, dass bei Betätigung des Türschlosses Hindernisse neu detektiert werden.

Möglich sind Sensoren u.a. am Außenspiegel, am Türschweller, unter dem Blech, innen oder auch außen. Die Sensoren können am Fensterrahmen vertikal angebracht werden.

Bei Einsatz von Remanenz können zwei Magneteinrichtungen eingesetzt werden, von denen die erste Magnetfeldeinheit eine Magnetfeldeinheit mit Stahlkern, Spule und Strömungskanal ist. Die zweite Magnetfeldeinheit ist ein Remanzsystem mit Remanenzmaterial im Kern oder/und im Rest des Magnetkreises. Wird über eine längere Zeit eine hohe Dämpfkraft benötigt, so wird das Remanenzmaterial durch einen entsprechenden Stromimpuls (oder Stromimpulsverlauf) aufmagnetisiert. Nach dem erneuten Anlegen eines Stromimpulses oder Stromimpulsverlaufs wird das Magnetfeld wieder reduziert oder komplett aufgehoben. Bei geschlossener Tür kein Remanenzfeld, somit ein leichtes Öffnen beim Unfall möglich.

Bei Strömen von z. B. 0 bis 3 Ampere kann das Magnetfeld wie in einer "normalen" Magnetfeldeinheit erzeugt werden. Zunehmender Strom = größeres Magnetfeld = größere Dämpferkraft. Dies alles stufenlos und sehr schnell (< 10ms).

Stromimpulse oder Stromimpulsverläufe von z.B. 5 bis 6 Ampere magnetisieren das Remanenzmaterial um, wodurch ein bleibendes Magnetfeld verbleibt. Dadurch kann ohne Stromzufuhr eine (hohe) Haltekraft erzeugt werden.

In allen Ausgestaltungen kann auch ein aktives System Anwendung finden.

Dabei tritt folgende Problematik auf. Das automatische Öffnen und Schließen der Türen, wie es heute beim Kofferraum ist, wird kommen. Der Einsatz der jetzigen Kofferraumschließmechanismen (Spindeltriebe) in der Fahrer- oder Beifahrertür wird nicht gewünscht, da diese viel zu langsam sind (der Kunde will nicht mehrere Sekunden warten, bis er einsteigen kann) und sehr laut sind. Bei einem Unfall kann das System zudem nicht geöffnet werden (stromlos sehr hohe Kräfte notwendig). Verformt sich dann noch der Spindeltrieb, geht die Türe gar nicht mehr auf. Zudem sind die Türkräfte im Vergleich zum Kofferraumdeckel sehr hoch (Schräglage des Autos - 100Nm). Beim Kofferraumdeckel hilft eine Gasfeder bzw. die Schwerkraft beim Schließen.

In allen Ausgestaltungen ist es möglich, Stickstoff oder Argon oder großmolekulare Gase, welche weniger flüchtig sind, als Aktormedium oder als kompressibles Medium im z. B. Ausgleichsvolumen zu verwenden.

Gasdämpfer aus dem Stand der Technik haben bei Fahrzeugen generell das Problem, dass sich aufgrund der Temperaturen die Kräfte stark ändern (Gasvolumen; tiefe Temperaturen - weniger Druck; hohe Temperaturen - höherer Druck). Dadurch ergeben sich Unterschiede im Verhalten. Bei der Erfindung mit einer magnetorheologischen Dämpfereinrichtung wird vorzugsweise eine Temperaturkompensation durchgeführt. In allen Ausgestaltungen ist es deshalb bevorzugt möglich, eine (Außen-) Temperatur zu kompensieren. Dazu kann z. B. die elektrische Spule zusätzlich bestromt und damit die Dämpfereinrichtung beheizt werden. Es kann aber auch eine separate Heizeinrichtung (nur für tiefe Temperaturen) eingebaut werden, beispielsweise ein Heizdraht, eine Heizhülle um die Dämpfereinrichtung etc. Die Aktivierung der Heizeinrichtung kann dann z. B. erfolgen, wenn der Benutzer in die Nähe des Fahrzeuges kommt, also frühzeitig (Keyless Go...) oder die Tür benutzt. Die Heizeinrichtung kann aber auch programmiert werden (z.B. morgens...).

Vorzugsweise umfasst die Türkomponente ein elektrisches Schloss. Es ist ein sanftes Schkließen "Soft-Close" möglich, wobei die Tür in den letzten Millimetern selbsttätig schließt. Dieses wird vorzugsweise umgekehrt angesteuert, d. h. die Tür wird freigegeben (und das Schloss geöffnet). Vorzugsweise wird die Tür dann automatisch geöffnet, indem z. B. der adaptive Dämpfer die Tür aufdrückt. So kann der Fahrer mit dem Smartdevice (Handy, Smartwatch...) oder einem Funkschlüssel die Tür zum Einsteigen öffnen. Er muss hierzu die Tür nicht berühren, was neben dem größeren Komfort auch den Vorteil hat, dass er sich die Hände nicht schmutzig machen kann , da der Benutzer die Tür ja zum Öffnen nicht mehr berühren muss. Denkbar ist auch, dass der Benutzer die Tür mittels Gestensteuerung öffnet (z. B. Fussbewegung bei/unter der Tür), was dann vorteilhaft ist, wenn er die Hände voll hat (z. B. nach einem Einkauf). Zudem kann der Benutzer dann, besonders wenn er von hinten (Heck) zum Fahrzeug kommt, direkt einsteigen.

Es ist möglich, nur eine Tür (z. B. die Fahrertür oder die Fondtüren) mit der Erfindung auszurüsten.

Bei den derzeitigen Fahrzeugen aus dem Stand der Technik sind mitunter die Türscharniere so angebracht (Türkinematik), dass die Tür in eine Richtung leichter geht als in die andere. Dies kann mit der erfindungsgemäßen Türkomponente ausgeglichen werden.

Nun kann ein aktives System mit einer MRF-Pumpe eingesetzt werden, bei der ein MRF-Ventil als Pumpe eingesetzt wird. Der Antriebsmotor kann in beide Antriebsrichtungen angetrieben werden. Je nach Drehrichtung des Motors fährt ein damit verbundener Zylinder ein oder aus. Um eine Regelung der Zylindergeschwindigkeit zu erreichen, kann das MRF-Ventil den Volumenstrom von 0% bis 100% über einen Bypass umleiten.

In allen Ausgestaltungen ist es im Sinne der vorliegenden Erfindung möglich, den weiteren Begriff "Türeinrichtung" auf den konkreteren Begriff "Tür" einzuschränken und die Begriffe entsprechend auszutauschen. Des Weiteren ist es in allen Ausgestaltungen möglich, die Erfindung auf eine verschwenkbare Tür oder verschwenkbare Klappe oder einer verschwenkbaren Deckel wie einen Heckdeckel zu konkretisieren. In diesem Sinne umfasst eine bewegbare Türeinrichtung eine verschwenkbare Tür und kann darauf eingeschränkt oder konkretisiert werden, sodass in der gesamten Beschreibung der Begriff "bewegbar" durch den Begriff "verschwenkbar" präzisiert werden kann. Umgekehrt kann der Begriff "Tür" durch "Türeinrichtung" ersetzt werden und es kann der Begriff "schwenkbar" durch "bewegbar" ersetzt werden.

Möglich ist es auch eine Öffnungs- und/oder Schließbewegung eines Verdecks eines Cabriolets mit der Erfindung zu dämpfen. In solchen Ausgestaltungen ist das bewegbare Verdeck als Türeinrichtung anzusehen und die ganze Konstruktion mit der Tragkonstruktion und dem daran aufgenommenen Verdeck als Türkomponente.

Die Erfindung ist nicht auf den Einsatz bei Automobilen beschränkt, sie kann auch eingesetzt werden bei z. B. Trucks/LKW; Landwirtschaftsfahrzeugen, sonstigen (Kraft-)Fahrzeugen, autonomen Fahrzeugen, Taxis, Möbeln, Flugzeugen und Militärfahrzeugen.

Möglich ist es auch, eine Öffnungs- und/oder Schließbewegung eines Verdecks z. B. eines Cabriolets mit der Erfindung zu dämpfen. In solchen Ausgestaltungen ist das bewegbare Verdeck als Türeinrichtung anzusehen und die ganze Konstruktion mit der Tragkonstruktion und dem daran aufgenommenen Verdeck als Türkomponente. Die Anmelderin behält sich vor, einen Anspruch auf eine Fahrzeugvorrichtung oder sonstige Vorrichtung auszurichten, bei der eine bewegbare Einrichtung an einer Tragkonstruktion zwischen einer Öffnungsstellung und einer Schließstellung bewegbar aufgenommen ist und bei der die Bewegung durch eine magnetorheologische Dämpfereinrichtung dämpfbar ist.

Die Erfindung ist auch auf eine Dämpfereinrichtung mit einem magnetorheologisches Fluid als Arbeitsfluid ausgerichtet, welche zwei relativ zueinander bewegbare Anschlusseinheiten umfasst, wobei eine Relativbewegung der beiden Anschlusseinheiten relativ zueinander (gesteuert) dämpfbar ist. Diese erfindungsgemäße Dämpfereinrichtung umfasst eine Kolbeneinheit oder Kolbeneinrichtung und eine die Kolbeneinheit umgebende Zylindereinheit, wobei die Kolbeneinheit ein Zylindervolumen in zwei Kammern teilt. Dabei weist die Kolbeneinheit eine sich durch die erste Kammer erstreckende erste Kolbenstange und eine sich durch die zweite Kammer erstreckende zweite Kolbenstange auf. Die Dämpfereinrichtung umfasst wenigstens eine Ausgleichseinrichtung mit einem automatischen Schließventil.

Diese erfindungsgemäße Dämpfereinrichtung weist viele Vorteile auf. Die erfindungsgemäße Dämpfereinrichtung kann in einer erfindungsgemäßen Türkomponente eingesetzt werden. Möglich ist aber auch ein Einsatz bei sonstigen Vorrichtungen und Einrichtungen.

Vorzugsweise weist die die Kolbeneinheit ein magnetorheologisches Dämpfungsventil mit wenigstens einem Strömungskanal auf.

Insbesondere ist wenigstens zum Teil oder vollständig innerhalb der Kolbenstange eine Ausgleichskammer einer Ausgleichseinrichtung ausgebildet.

Vorzugsweise umfasst die Ausgleichseinrichtung einen Trennkolben. Vorzugsweise ist der Trennkolben der Ausgleichseinrichtung innerhalb der Kolbenstange angeordnet.

Erfindungsgemäß umfasst die Ausgleichseinrichtung ein automatisches Schließventil. Das Schließventil umfasst insbesondere einen Schließkolben innerhalb der Kolbenstange.

Es ist bevorzugt, dass der Schließkolben durch eine Vorbelastungseinrichtung in eine geöffnete Stellung vorbelastet wird. Eine solche Vorbelastungseinrichtung kann z. B. durch eine Gasfeder in der Ausgleichseinrichtung gebildet werden. Beispielsweise kann der Schließkolben eine eigene Kolbenstange aufweisen, die durch den (geringen) Gasdruck der Gasfeder in die ausgefahrene Stellung vorbelastet wird. Wird aber der Druck in dem MRF auf der anderen Seite des Schließkolbens in der zugehörigen Kammer der Dämpfereinrichtung erhöht, so schließt der Schließkolben automatisch.

Es sind Weiterbildungen bevorzugt, die ein Merkmal oder mehrere Merkmale der zuvor beschriebenen Türkomponente aufweisen. Die Die Anmelderin behält sich vor, die zuvor mit Bezug auf eine Türkomponente beschriebenen Dämpfereinrichtungen separat zu beanspruchen.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

### Darin zeigen:

- Fig. 1: eine schematische Draufsicht auf ein Fahrzeug mit einer erfindungsgemäßen Türkomponente;
- Fig. 2: eine schematische geschnittene Ansicht einer Dämpfereinrichtung;
- Fig. 3: eine vergrößerten Querschnitt der Dämpfereinrichtung nach Fig. 2;
- Fig. 4: eine perspektivische Darstellung einer weiteren Dämpfereinrichtung für die Türkomponente nach Fig. 1;
- Fig. 5: eine Detailvergrößerung einer Draufsicht auf die Dämpfereinrichtung nach Fig. 4;
- Fig. 6: eine Detailvergrößerung eines schematischen Schnittes durch die Dämpfereinrichtung nach Fig. 4;
- Fig. 7: eine Detailvergrößerung eines schematischen Schnittes durch den Kolben der Dämpfereinrichtung nach Fig. 4;
- Fig. 8: einen Schnitt einer weitere Ausführungsform einer Dämpfereinrichtung;
- Fig. 9: einen Schnitt durch noch eine weitere Ausführungsform einer Dämpfereinrichtung;
- Fig. 10: einen Schnitt durch ein Dämpfungsventil; und
- Fig. 11: eine schematische Darstellung einer weiteren Türkomponente für das Fahrzeug nach Fig. 1.

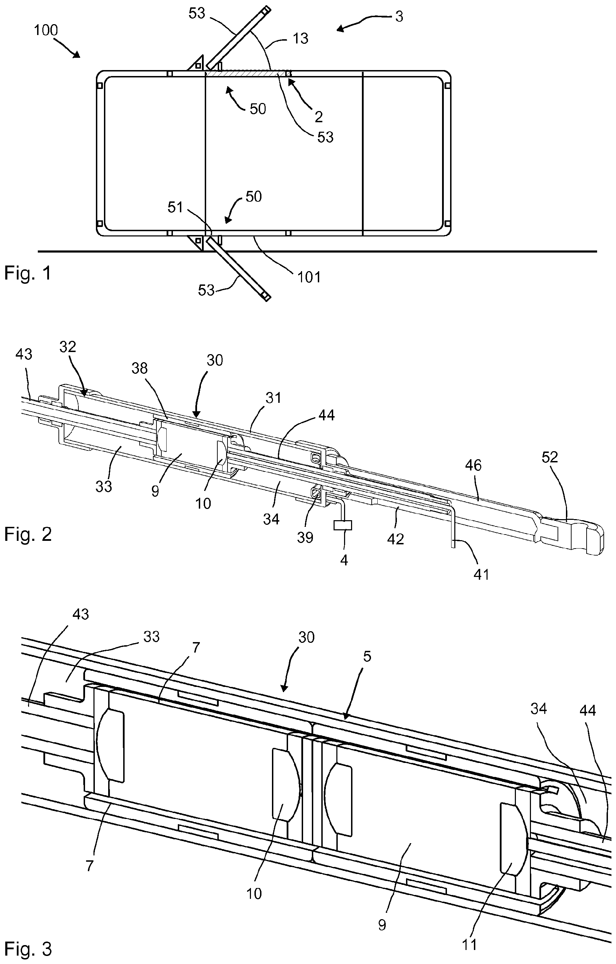

Figur 1 zeigt eine schematische Draufsicht auf ein an einem Straßenrand haltendes Kraftfahrzeug 100, bei dem hier zwei als Türen ausgeführte Türeinrichtungen 53 vorgesehen sind, die beide geöffnet sind. Die Türen befinden sich jeweils etwa in einer Winkelstellung 13. Die Türen sind jeweils Teil einer Türkomponente 50, die hier die Türen 53 umfasst. Möglich ist es genauso, dass an die Türkomponente 50 eine Tür 53 angebracht wird. Jede Türkomponente 50 umfasst eine Dämpfereinrichtung 1. Die Türkomponente 50 bzw. die Dämpfereinrichtung 1 umfasst jedenfalls Anschlusseinheiten 51 und 52 zum Anschluss an der Tragkonstruktion 101 des Fahrzeugs 100 bzw. an der Tür 53, um die Tür schwenkbar an der Tragkonstruktion 101 aufzunehmen. Dabei kann die Tür aus mehreren jeweils schwenkbaren Einheiten bestehen, die miteinander gelenkig verbunden sind. Die Tür kann an einer oder zwei oder mehr Schwenkachsen schwenkbar aufgenommen sein. Schraffiert eingezeichnet ist eine Tür 53 in der Schließstellung 2, in der die Tür hier bündig mit dem Fahrzeug abschließt.

In Figur 2 ist in einer vergrößerten Darstellung eine Dämpfereinrichtung 1 abgebildet, die vorzugsweise in der Türkomponente 50 in Fig. 1 eingesetzt wird. Die Dämpfereinrichtung 1 weist einen Dämpfer auf magnetorheologischer Basis auf.

Die Türkomponente 50 bzw. die Dämpfereinrichtung 1 in Figur 2 weist Anschlusseinheiten 51 und 52 zur Verbindung mit der Tragkonstruktion 101 und der Tür 53 auf, um eine definierte und gesteuerte Verschwenkung der Tür bei der Überführung von der in Figur 1 dargestellten Öffnungsstellung in die auch in Figur 1 angedeutete Schließstellung 2.

Die Dämpfereinrichtung 1 umfasst eine Zylindereinheit 31, in der der Kolben 38 der Kolbeneinheit 30 das Zylindervolumen 32 in eine erste Kammer 33 und eine zweite Kammer 34 variabel teilt.

An der Kolbenstange 43 oder 44 kann eine Sensoreinrichtung 12 angebracht sein, mit der eine Absolutposition oder Relativbewegung der Dämpfereinrichtung 1 detektiert werden kann. Durch Abfrage der Sensoreinrichtung kann die Position der beiden Anschlusseinheiten 51 und 52 zueinander festgestellt werden, sodass mit der Sensoreinrichtung auch direkt die Position oder die Winkelstellung der Tür 53 erfasst wird.

Die Anschlusskabel 62 für die elektrische Spule 10 in dem Kolben 38 (und die Sensoreinrichtung 12) werden hier durch die Kolbenstange 44 nach außen geführt. Die Anschlusskabel 62 sind hier mit der Steuereinrichtung 4 verbunden.Beispielhaft für alle Ausführungsbeispiele ist in Figur 2 eine schematische Steuereinrichtung 4 eingezeichnet, mit der das Dämpfungsventil 5, die Dämpfereinrichtung 1 und/oder die gesamte Türkomponente 50 steuerbar ist. Die Steuereinrichtung 4 kann auch Teil des Fahrzeugs 100 oder einer anderen Vorrichtung sein.

Figur 2 zeigt eine Dämpfereinrichtung 1 mit einer durchgehenden Kolbenstange bzw. mit zwei separaten Kolbenstangen 43, 44, die jeweils fest mit dem Kolben 38 verbunden sind. Das Innere der Zylindereinheit 31 wird durch den Kolben 38 in zwei Kammern 33 und 34 geteilt. Die Durchtrittsstellen werden über geeignete Dichtungen abgedichtet. Hier werden beide Kolbenstangen 43 und 44 an den jeweiligen Enden nach draußen geführt, sodass ein Eintauchen des Volumens einer Kolbenstange nicht ausgeglichen zu werden braucht, auch, wenn sich der Kolben 38 hin und herbewegt.

Um eine Volumenänderung des magnetorheologischen Fluids bzw. der magnetorheologischen Flüssigkeit durch Temperaturunterschiede ausgleichen zu können, ist hier eine Ausgleichseinrichtung 39 vorgesehen, die beispielsweise als hohler Gummiring oder dergleichen ausgeführt ist und insofern bei einer Volumenausdehnung oder einer Volumenabnahme durch Temperaturunterschiede bedingt einen entsprechenden Volumenausgleich zur Verfügung stellt. Eine solche Ausgleichseinrichtung kann in der Kammer 33 oder der Kammer 34 angeordnet sein. Möglich sind Ausgleichseinrichtungen in den beiden Kammern 33 und 34.

In allen Ausgestaltungen ist der Kolben 38 auch als Dämpfungsventil 5 ausgeführt und weist einen oder zwei oder mehrere Strömungskanäle 7 auf, die die erste Kammer 33 mit der zweiten Kammer 34 verbinden. Die Kammern 33 und 34 sind mit einem magnetorheologischen Fluid 6 gefüllt. Die Dämpfung wird hier dadurch erreicht, dass an dem Dämpfungsventil 5 eine Magneteinrichtung 9 oder wenigstens eine Magneteinrichtung 9 angeordnet ist, die eine elektrische Spule und gegebenenfalls hartmagnetisches Material umfasst.

Über einen kurzen elektrischen Impuls an der Spule 10 kann ein magnetischer Impuls ausgelöst, der zu einer permanenten Magnetisierung einer hartmagnetisches Material umfassenden Magneteinrichtung 9 führt, sodass im Anschluss daran der Strömungswiderstand durch den Strömungskanal 7 entsprechend der Stärke des wirkenden Magnetfeldes 8 ansteigt.

Durch entsprechende Ummagnetisierungen der Magneteinrichtungen 9 kann so eine beliebige Dämpfung der Türbewegung der Tür 53 eingestellt werden. Außerdem ist es möglich, zusätzlich zu einem permanent wirkenden Magnetfeld die Spule 10 einzusetzen, um das Magnetfeld 8 der Magneteinrichtungen 9 dynamisch zu modellieren. Durch ein gleichgerichtetes Magnetfeld kann die Dämpfung verstärkt werden und durch ein entsprechend entgegengesetzt ausgerichtetes Magnetfeld kann die Dämpfung abgeschwächt oder sogar werden.

Möglich und bevorzugt ist es auch, das Magnetfeld nur durch die elektrische Spule 10 zu erzeugen und nicht auf Remanenz zurückzugreifen.

In diesem Ausführungsbeispiel ist das Anschlusskabel 41 bzw. die Anschlusskabel 41 sind durch die Kolbenstange 44 nach außen geführt. Die Kolbenstange 44 ist in einem Rohr 46 verschiebbar aufgenommen und geführt. Am Ende der Kolbenstange 44 wird hier das Anschlusskabel 41 aus der Kolbenstange herausgeführt und durch einen Schlitz 42 in dem Rohr 46 nach außen geführt.

Figur 3 zeigt eine Variante, bei der zwei Magneteinrichtungen 9 bzw. wenigstens zwei elektrische Spulen 10 und 11 vorgesehen sind. Die magnetischen Spulen 10 und 11 der Magneteinrichtungen 9 sind wiederum im Kolben 38 der Kolbeneinheit 30 innerhalb der Zylindereinheit 31 angeordnet. Auch hier trennt der Kolben zwei Kammern 33 und 34 des Zylindervolumens 32. Es sind auf beiden Seiten erste und zweite Kolbenstangen 43 und 44 vorgesehen und aus der Zylindereinheit 31 heraus geführt.

Hier wird eine elektrische Spule 10, 11 zur Erzeugung eines magnetischen Impulses und zur dauerhaften Magnetisierung der Magneteinrichtung 9 eingesetzt. Die jeweils andere elektrische Spule 11, 10 kann zur Modulation des aktuell wirkenden Magnetfeldes eingesetzt werden.

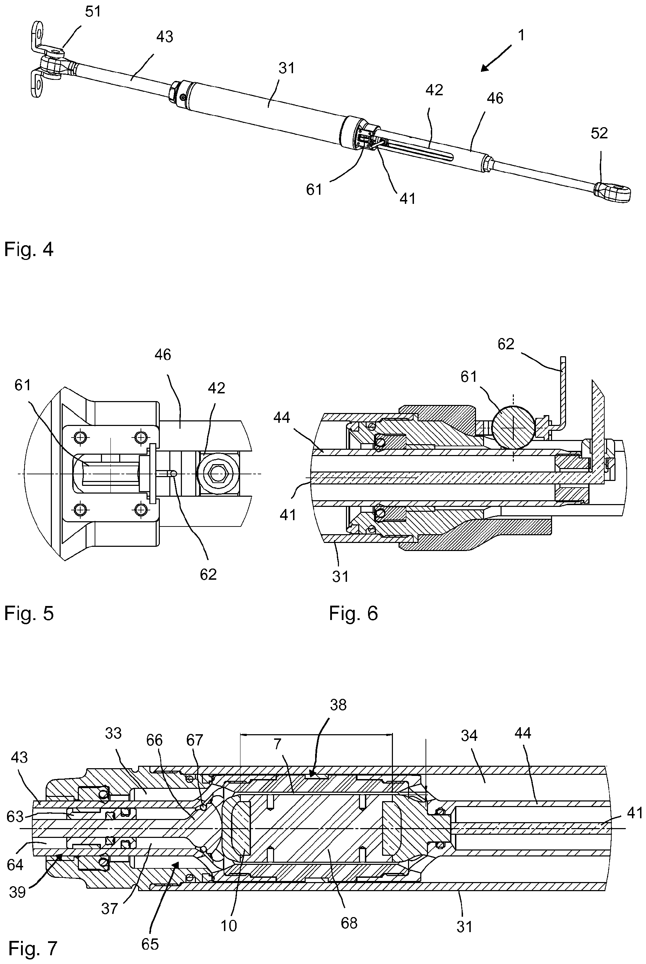

Figur 4 bis 7 zeigen eine weitere schematisch dargestellte Variante einer Dämpfereinrichtung 1 einer Türkomponente 50 mit Anschlusseinheiten 51 und 52.

Fig. 4 zeigt eine perspektivische Ansicht. Die Dämpfereinrichtung 1 weist ein magnetorheologisches Fluid 6 als Arbeitsfluid auf. Figuren 5 bis 7 zeigen vergrößerte Details. Wie Fig. 7 zeigt, trennt eine Kolbeneinheit 30 mit einem Kolben 38 eine erste Kammer 33 von der zweiten Kammer 34. Durch den Kolben führt wenigstens ein Strömungskanal 7. Das magnetorheologische Fluid strömt bei einer Bewegung des Kolbens nach links von der ersten Kammer 33 in die zweite Kammer 34 und bei einer umgekehrten Bewegung von der zweiten Kammer 34 in die erste Kammer 33.

In Fig. 4 ist eine Sensoreinrichtung 12 erkennbar, die hier ein Reibrad 61 umfasst. Das Reibrad 61 liegt an der Kolbenstange 44 an (Fig. 6) und wird bei einer Relativbewegung der Anschlusseinheiten 51, 52 zueinander gedreht, sodass eine Erfassung der Position der Dämpfereinrichtung 1 ermöglicht wird. Daraus kann eine Winkelstellung der Tür 53 abgeleitet werden. Möglich ist es in allen Ausgestaltungen aber auch, dass andere Wegsensoren oder Winkelsensoren z. B. am Drehgelenk vorgesehen sind, sodass direkt eine Winkelstellung ausgegeben wird.

Auch hier wird eine elektrische Spule 10 zur Erzeugung eines magnetischen Impulses und zur dauerhaften Magnetisierung der Magneteinrichtung 9 eingesetzt. Die gleiche oder auch eine andere elektrische Spule kann zur Modulation des aktuell wirkenden Magnetfeldes eingesetzt werden.

In Figur 7 ist die Ausgleichseinrichtung 39 innerhalb einer der Kolbenstangen 43, 44 angeordnet und hier innerhalb der Kolbenstange 43. Beide Kolbenstangen 43, 44 sind hohl ausgeführt und jeweils fest mit dem Kolben 38 verbunden, hier z. B. verschraubt. In der Kolbenstange 43 ist eine Ausgleichskammer 37 ausgebildet, die an einem Ende verschlossen ist (hier nicht mehr dargestellt) und an dem anderen Ende durch ein Schließventil 65 begrenzt wird. Das Schließventil 65 öffnet und schließt bei Bedarf, sodass in beide Bewegungsrichtungen jeweils gleiche Bedingungen vorliegen. Das Gasvolumen 64 der Ausgleichseinrichtung wird durch einen Trennkolben 63 von der Ausgleichsvolumen 37 getrennt. Der Trennkolben 63 wird durch das unter einem einen Überdruck stehenden Gasvolumen 64 vorbelastet. Es reicht hier ein geringer Überdruck von zwischen 2 und 8 bar, insbesondere 2 bis 5 bar aus, um eine zuverlässige Funktion zu ermöglichen.

Wird der Kolben 38 nach links bewegt, sodass das Volumen der zweiten Kammer 44 verringert wird, so strömt - gesteuert durch das Magnetfeld der Spule 10 - das MRF durch den Strömungskanal 7 in die erste Kammer 43.

Wird der Kolben 38 nach rechts bewegt, sodass das Volumen der zweiten Kammer 34 verringert wird, so strömt - gesteuert durch das Magnetfeld der Spule 10 - das MRF durch den Strömungskanal 7 in die erste Kammer 33. Durch das Schließventil 65 wird sicher gestellt, dass das MRF nicht in die Ausgleichskammer strömt, da das Schließventil 65 einen Schließkolben aufweist, der die Ausgleichskammer abtrennt, wenn der Kolben 38 so bewegt wird, dass das Volumen der ersten Kammer 33 verringert wird. Das wird vorzugsweise dadurch erreicht, dass das Schließventil 65 einen verbreiterten Kopf aufweist, an dem eine Dichtung 67 vorgesehen ist. Durch den erhöhten Druck in der ersten Kammer 33 bedingt, fährt der Schließkolben 66 zurück und die Ausgleichskammer 37 wird über die Dichtung 67 von der ersten Kammer 33 abgetrennt. Dadurch kann eine gleiche Wirkung bei Betätigung in beide Richtungen erreicht werden.

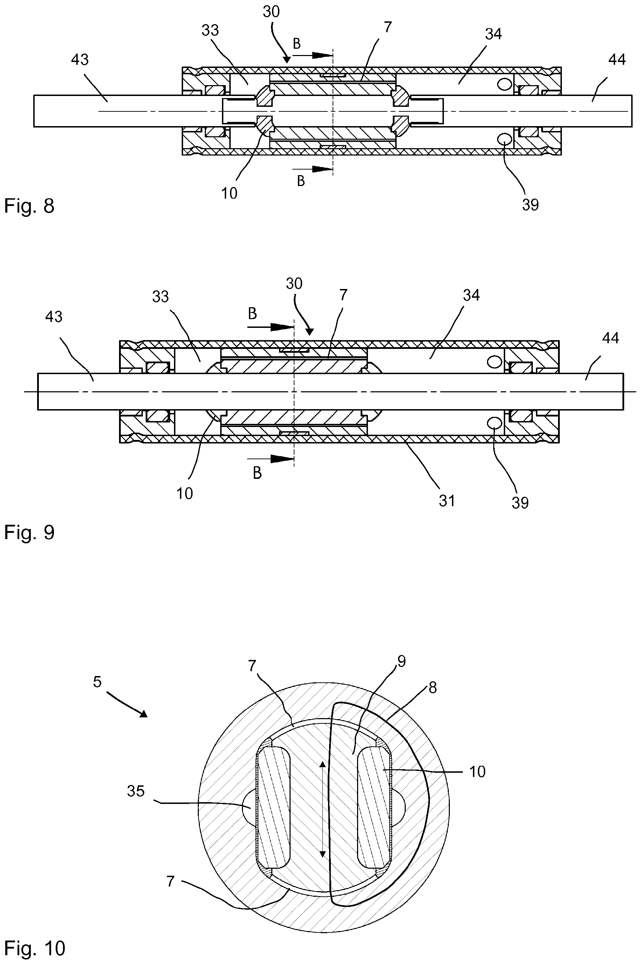

Fig. 8 zeigt eine Variante einer Dämpfereinrichtung 1 für eine Türkomponente 50 mit einem einfachen Aufbau. Hier sind die beiden Kolbenstangen 43 und 44 jeweils hohl ausgeführt und an den mit einem entsprechenden Gewinde versehenen Kern angeschraubt oder auf eine andere Art damit fest verbunden. Die Anschlussbereiche können eben den Anschlussgewinden flacher ausgebildet sein, um dort mehr Bauraum für die elektrische Spule zur Verfügung zu stellen. Der massive Kern bietet gute Eigenschaften für das Magnetfeld.

In allen Ausgestaltungen wird vorzugsweise eine elektrische Spule eingesetzt, bei der die Spulenwicklungen im Wesentlichen oder vollständig um eine Achse gewickelt ist, die quer zur Längsachse der Kolbenstangen verläuft. Eine solche elektrische Spule wird auch als liegende Spule bezeichnet. Im Gegensatz zu einer konzentrisch um die Kolbenstange gewickelten Spule. Der Strömungskanal wird vorzugsweise schlitzartig ausgeführt. Vorzugsweise sind zwei symmetrisch angeordnete Strömungskanäle vorgesehen.

Fig. 9 zeigt eine Variante einer Dämpfereinrichtung 1 für eine Türkomponente 50 mit einem einfachen Aufbau. Hier sind die beiden Kolbenstangen 43 und 44 jeweils hohl ausgeführt

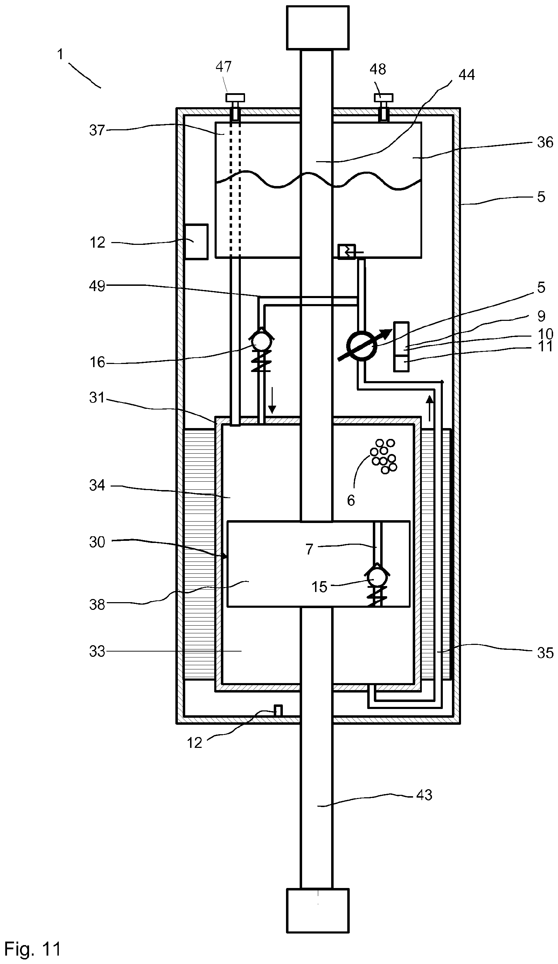

Figur 10 zeigt einen schematischen Querschnitt durch ein Dämpfungsventil 5 für die Dämpfereinrichtung aus Figur 11.

Figur 11 zeigt eine andere schematisch dargestellte Variante einer Dämpfereinrichtung 1 einer Türkomponente 50 mit Anschlusseinheiten 51 und 52. Figur 10 zeigt das zugehörige Dämpfungsventil 5. Die Dämpfereinrichtung 1 weist ein magnetorheologisches Fluid 6 als Arbeitsfluid auf. Eine Kolbeneinheit 30 mit einem Kolben 38 trennt eine erste Kammer 33 von der zweiten Kammer 34. Durch den Kolben führt wenigstens ein Strömungskanal 7. Das Einwegventil 15 öffnet für die Strömung des magnetorheologischen Fluids von der zweiten Kammer 34 in die erste Kammer 33. Von dort aus wird das Arbeitsfluid durch den Rückkanal 35 zu dem hier externen Dämpfungsventil 5 geleitet, dem eine Magneteinrichtung 9 und eine elektrische Spule 10 zugeordnet sind, um die gewünschte Dämpfung einzustellen. Das Dämpfungsventil 5 steht wiederum über eine Leitung 49 und ein zweites Einwegventil 16 mit der zweiten Kammer 34 in Strömungsverbindung.

Sowohl beim Eintauchen der Kolbenstange 43 in die Zylindereinheit 31 als auch beim Austauchen der Kolbenstange 43 aus der Zylindereinheit 31 strömt das Arbeitsfluid 6 in der gleichen Richtung entlang der eingezeichneten Pfeile.

Die Dämpfereinrichtung 1 weist eine durchgehende Kolbenstange bzw. zwei separate Kolbenstangen 43, 44 auf, die an den jeweiligen Enden aus dem Inneren der Zylindereinheit 31 nach außen geführt werden. Das Innere der Zylindereinheit 31 wird durch den Kolben 38 wieder in zwei Kammern 33 und 34 geteilt.

Dadurch, dass beide Kolbenstangen 43 und 44 an den jeweiligen Enden nach draußen geführt werden, muss beim Eintauchen des Volumens einer Kolbenstange kein Volumenausgleich durchgeführt werden.

Um eine Volumenausdehnung durch Temperaturunterschiede ausgleichen zu können, ist wieder die Ausgleichseinrichtung 37 vorgesehen. Die Ausgleichseinrichtung 37 könnte auch als hohler Gummiring oder dergleichen ausgeführt sein und kann insofern dann bei einer Volumenausdehnung oder einer Volumenabnahme durch Temperaturunterschiede bedingt einen entsprechenden Volumenausgleich zur Verfügung stellt. In der Ausgleichskammer 37 ist ein Ausgleichsvolumen 36 vorgesehen, welches mit einem Gas gefüllt ist. Eine Ausgleichseinrichtung kann auch in der Kammer 33 oder in der Kammer 34 angeordnet sein. Möglich sind Ausgleichseinrichtungen in den beiden Kammern 33 und 34.

Ventile 47 und 48 zum Befüllen der ersten bzw. zweiten Kammer 33, 34 und der Ausgleichskammer 37 sind vorgesehen.

Eine oder mehrere Sensoreinrichtungen 12 können vorgesehen sein, um eine Relativposition der beiden Anschlusseinheiten 51 und 52 zueinander zu detektieren, um daraus eine Winkelstellung der Tür 53 abzuleiten. Möglich ist es in allen Ausgestaltungen aber auch, dass andere Winkelsensoren z. B. am Drehgelenk vorgesehen sind, sodass direkt eine Winkelstellung ausgegeben wird.

Auch wird eine elektrische Spule 10 zur Erzeugung eines Magnetfeldes zur Steuerung der Dämpfung eingesetzt. Es ist mit der elektrischen Spule 10 auch möglich, magnetische Impulse und zur dauerhaften Magnetisierung der Magneteinrichtung 9 auszugeben. Die gleiche oder auch eine andere elektrische Spule kann zur Modulation des aktuell wirkenden Magnetfeldes eingesetzt werden.

Figur 10 zeigt einen schematischen Querschnitt durch ein Dämpfungsventil 5. Bei dem externen Dämpfungsventil 5 sind alle abgebildeten Teile vorzugsweise unbeweglich zueinander. In dem Gehäuse sind die Strömungskanäle 7 des Dämpfungsventils 5 erkennbar, die durch eine Trennwand jeweils auch noch in zwei oder mehr Teilkanäle unterteilt werden können. Eingezeichnet ist auch eine Magnetfeldlinie des Magnetfeldes 8. Das Magnetfeld tritt etwa senkrecht durch die Strömungskanäle 7 des Dämpfungsventils durch. Die elektrische Spule 10 dient zur Erzeugung eines variablen Magnetfelds und insbesondere auch dazu, einen magnetischen Impuls auszugeben, um die Magneteinrichtung 9 wunschgemäß zu magnetisieren. Das Dämpfungsventil 5 kann auch Rückkanäle 35 aufweisen, die im Wesentlichen unbeeinflusst von einem Magnetfeld der Magneteinrichtung 9 bleiben.

In entsprechender Weise kann - ohne Rückkanäle 35 - auch ein Dämpfungsventil als Kolben 38 ausgeführt werden und bei den zuvor beschriebenen Ausgestaltungen angepasst eingesetzt werden. Das Gehäuse dient dann als Kolben 38. Das Magnetfeld tritt jedenfalls etwa senkrecht durch die Strömungskanäle 7 des Dämpfungsventils 5 hindurch.

### Bezugszeichenliste:

| | | | |
|---|---|---|---|
| 1 | Dämpfereinrichtung | 34 | zweite Kammer |
| 2 | Schließstellung | 35 | Rückkanal |
| 3 | Öffnungsstellung | 36 | Ausgleichsvolumen |
| 4 | Steuereinrichtung | 37 | Ausgleichskammer |
| 5 | Dämpfungsventil | 38 | Kolben |
| 6 | MRF | 39 | Ausgleichseinrichtung |
| 7 | Strömungskanal | 40 | elektrische Anschlusseinheit |
| 8 | Magnetfeld | | |
| 9 | Magneteinrichtung | 41 | Anschlusskabel |
| 10 | elektrische Spule | 42 | Schlitz |
| 11 | elektrischen Spule | 43 | erste Kolbenstange |
| 12 | Sensoreinrichtung | 44 | zweite Kolbenstange |
| 13 | Winkelstellung | 45 | Durchmesser von 43 |
| 14 | vorbestimmte Winkelposition | 46 | Rohr |
| | | 47 | Ventil |
| 15 | erstes Einwegventil | 48 | Ventil |
| 16 | zweites Einwegventil | 49 | Leitung |
| 18 | magnetischer Impuls | 50 | Türkomponente |
| 19 | Zeitspanne | 51 | Anschlusseinheit |
| 20 | Änderungsgeschwindigkeit | 52 | Anschlusseinheit |
| 21 | Verzögerung | 53 | Tür |
| 22 | Drehgeschwindigkeit | 54 | Winkelstellung |
| 23 | Grenzwert von 20 | 60 | Hindernis |
| 24 | geringere Dämpfung | 61 | Reibrad |
| 25 | größere Dämpfung | 62 | Kabel |
| 26 | maximale Dämpfung | 63 | Trennkolben |
| 27 | Dämpfung | 64 | Gasvolumen |
| 28 | Schließgeschwindigkeit | 65 | Schließventil |
| 29 | zweiter Ausgleichskanal | 66 | Schließkolben |
| 30 | Kolbeneinheit | 67 | Dichtung |
| 31 | Zylindereinheit | 68 | Kern |
| 32 | Zylindervolumen | 100 | Fahrzeug |
| 33 | erste Kammer | 101 | Tragkonstruktion |

## Patentansprüche

1. Türkomponente (50) mit wenigstens einer steuerbaren und ein magnetorheologisches Fluid (6) als Arbeitsfluid enthaltenden Dämpfereinrichtung (1) umfassend zwei relativ zueinander bewegbare Anschlusseinheiten (51, 52), wobei eine der beiden Anschlusseinheiten (51, 52) mit einer Tragkonstruktion und die andere der beiden Anschlusseinheiten (51, 52) mit einer bewegbaren Türeinrichtung (53), insbesondere eines Fahrzeugs (100), verbindbar ist, um eine Bewegung der bewegbaren Türeinrichtung (53) wenigstens teilweise zwischen einer Schließstellung (2) und einer Öffnungsstellung (3) gesteuert zu dämpfen,
wobei die magnetorheologische Dämpfereinrichtung (1) eine Kolbeneinheit (30) und eine die Kolbeneinheit (30) umgebende Zylindereinheit (31) umfasst, wobei die Kolbeneinheit (30) ein Zylindervolumen (32) in zwei Kammern (33, 34) teilt, wobei die Kolbeneinheit (31) eine sich durch die erste Kammer (33) erstreckende erste Kolbenstange (43) und eine sich durch die zweite Kammer (34) erstreckende zweite Kolbenstange (44) aufweist,
**dadurch gekennzeichnet,**
**dass** die Dämpfereinrichtung (1) wenigstens eine Ausgleichseinrichtung (39) mit einem automatischen Schließventil (65) umfasst.

2. Türkomponente (50) nach dem vorhergehenden Anspruch, wobei beide Kolbenstangen (43, 44) jeweils aus dem Zylindervolumen (32) und/oder der Zylindereinheit (31) nach außen geführt werden und/oder wobei eine der Kolbenstangen (43, 44) teleskopierbar ausgebildet ist und an einer Seite an dem Kolben (38) befestigt und an der anderen Seite mit der Zylindereinheit (31) fest verbunden ist und/oder wobei die erste und die zweite Kolbenstange (43, 44) jeweils den gleichen Durchmesser (45) aufweisen.

3. Türkomponente (50) nach einem der vorhergehenden Ansprüche, wobei die Dämpfereinrichtung (1) ein steuerbares Dämpfungsventil (5) mit einem von einer magnetorheologischen Flüssigkeit (6) durchströmbaren Strömungskanal (7) umfasst, wobei der Strömungskanal (7) einem veränderbaren Magnetfeld (8) aussetzbar ist, so dass der Strömungswiderstand des Strömungskanals (7) und somit eine Dämpfung der Dämpfereinrichtung (1) über das Magnetfeld (8) in dem Strömungskanal (7) beeinflussbar ist.

4. Türkomponente (50) nach dem vorhergehenden Anspruch, wobei die Ausgleichseinrichtung (39) ein komprimierbares Ausgleichsvolumen (36) umfasst und wobei das Ausgleichsvolumen der Ausgleichseinrichtung vorzugsweise kleiner ist als das Volumen der ersten Kolbenstange (43) und/oder der zweiten Kolbenstange (44) innerhalb der Zylindereinheit (31).

5. Türkomponente (50) nach einem der vorhergehenden Ansprüche, wobei eine der beiden Kolbenstangen (43, 44) als elektrische Anschlusseinheit (40) dient und an der Kolbenstange (43, 44) wenigstens ein Anschlusskabel (41) geführt wird.

6. Türkomponente (50) nach einem der vorhergehenden Ansprüche, wobei wenigstens eine der beiden Kolbenstangen (43, 44) außerhalb der Zylindereinheit (31) in einer mit wenigstens einem Schlitz (42) ausgerüsteten Rohr (46) verschiebbar aufgenommen ist und wobei insbesondere das Rohr Teil einer der Anschlusseinheiten ist.

7. Türkomponente nach einem der vorhergehenden Ansprüche, wobei die Dämpfereinrichtung wenigstens eine Sensoreinrichtung (12) umfasst und wobei ein Teil der Sensoreinrichtung (12) an der Kolbenstange befestigt ist und wobei die Sensoreinrichtung (12) insbesondere ein Reibrad umfasst, mit welchem ein Maß für eine Relativbewegung der beiden Anschlusseinheiten (51, 52) zueinander erfassbar ist.

8. Türkomponente (50) nach einem der vorhergehenden Ansprüche, umfassend die Tragkonstruktion (101) und/oder die Tür (53) Türkomponente nach einem der vorhergehenden Ansprüche, wobei ein Lagesensor (70) zugeordnet ist, der ein Maß für eine Abweichung (71) von einer horizontalen Ausrichtung des Fahrzeugs (100) erfasst und wobei die Steuereinrichtung (4) in Abhängigkeit von der Abweichung (71) von der horizontalen Ausrichtung die Dämpfung der Dämpfereinrichtung (1) steuert.

9. Türkomponente nach einem der vorhergehenden Ansprüche, wobei wenigstens ein Lastsensor (72) zur Erfassung einer auf die Tür (53) aufgebrachten Last zugeordnet ist und/oder wobei wenigstens ein Nahfeldsensor (73) zugeordnet ist, um Hindernisse (60) in der Umgebung zu erkennen.

10. Türkomponente (50) nach einem der vorhergehenden Ansprüche, wobei die Kolbeneinheit (30) mit einem ersten Einwegventil (15) ausgerüstet ist, und wobei die beiden Kammern (33, 34) über einen externen und mit wenigstens einem steuerbaren magnetorheologischen Dämpfungsventil (5) ausgerüsteten Rückkanal (35) miteinander zu einem Einwegkreislauf verbunden sind, sodass das magnetorheologische Fluid (6) beim Einfahren und Ausfahren der Kolbeneinheit (30) in die gleiche Strömungsrichtung durch die Kolbeneinheit (30) strömt und wobei insbesondere auf einer Niederdruckseite des Dämpfungsventils (5) ein Ausgleichsvolumen (36) vorgesehen ist.

11. Türkomponente (50) nach dem vorhergehenden Anspruch, wobei eine erste Kammer (33) der beiden Kammern (33, 34) mit dem Dämpfungsventil (5) und wobei das Dämpfungsventil (5) über ein zweites Einwegventil (16) mit der zweiten Kammer (34) verbunden ist und wobei insbesondere das Ausgleichsvolumen (36) mit dem Dämpfungsventil (5) und der zweiten Kammer (34) verbunden ist.

12. Dämpfereinrichtung (1) mit einem magnetorheologisches Fluid (6) als Arbeitsfluid umfassend zwei relativ zueinander bewegbare Anschlusseinheiten (51, 52), wobei eine Relativbewegung der beiden Anschlusseinheiten (51, 52) relativ zueinander gesteuert dämpfbar,
weiterhin umfassend eine Kolbeneinheit (30) und eine die Kolbeneinheit (30) umgebende Zylindereinheit (31), wobei die Kolbeneinheit (30) ein Zylindervolumen (32) in zwei Kammern (33, 34) teilt,
wobei die Kolbeneinheit (31) eine sich durch die erste Kammer (33) erstreckende erste Kolbenstange (43) und eine sich durch die zweite Kammer (34) erstreckende zweite Kolbenstange (44) aufweist,
**dadurch gekennzeichnet,**
**dass** die Dämpfereinrichtung (1) wenigstens eine Ausgleichseinrichtung (39) mit einem automatischen Schließventil (65) umfasst.

13. Dämpfereinrichtung (1) nach dem vorhergehenden Anspruch, wobei die Kolbeneinheit ein magnetorheologisches Dämpfungsventil mit wenigstens einem Strömungskanal aufweist und/oder wobei innerhalb der Kolbenstange eine Ausgleichskammer der Ausgleichseinrichtung ausgebildet ist.

14. Dämpfereinrichtung (1) nach einem der beiden vorhergehenden Ansprüche, wobei innerhalb der Kolbenstange eine Trennkolben der Ausgleichseinrichtung angeordnet ist.

15. Dämpfereinrichtung (1) nach einem der drei vorhergehenden Ansprüche, wobei das Schließventil insbesondere einen Schließkolben innerhalb der Kolbenstange umfasst und wobei insbesondere der Schließkolben durch eine Vorbelastungseinrichtung in eine geöffnete Stellung vorbelastet ist.

## Claims

1. Door component (50) with at least one controllable damper device (1) containing a magnetorheological fluid (6) as the working fluid, comprising two connecting units (51, 52) movable relative to one another, one of the two connecting units (51, 52) being provided for connection with a supporting structure and the other of the two connecting units (51, 52), with a movable door device (53) in particular of a vehicle (100), to at least partially control the damping of a movement of the movable door device (53) between a closed position (2) and an open position (3),
wherein the magnetorheological damper device (1) comprises a piston unit (30) and a cylinder unit (31) surrounding the piston unit (30), the piston unit (30) subdividing the cylinder volume (32) in two chambers (33, 34),
wherein the piston unit (31) includes a first piston rod (43) extending through the first chamber (33) and a second piston rod (44) extending through the second chamber (34),
**characterized in**
**that** the damper device (1) comprises at least one equalizing device (39) with an automatic lock valve (65).

2. The door component (50) according to the preceding claim,
wherein both of the piston rods (43, 44) are each routed outwardly out of the cylinder volume (32) and/or the cylinder unit (31), and/or wherein one of the piston rods (43, 44) is configured telescopic and is attached to the piston (38) on one side and fixedly connected with the cylinder unit (31) on the other side, and/or wherein the first and second piston rods (43, 44) each show the same diameter (45).

3. The door component (50) according to any of the preceding claims, wherein the damper device (1) comprises a controllable damping valve (5) with a flow duct (7) through which a magnetorheological liquid (6) can flow, wherein the flow duct (7) can be exposed to a variable magnetic field (8), so that the flow resistance of the flow duct (7) and thus the damping of the damper device (1) can be influenced by way of the magnetic field (8) in the flow duct (7).

4. The door component (50) according to the preceding claim,
wherein the equalizing device (39) comprises a compressible equalizing volume (36), and wherein the equalizing volume of the equalizing device is preferably smaller than the volume of the first piston rod (43) and/or the second piston rod (44) inside of the cylinder unit (31).

5. The door component (50) according to any of the preceding claims, wherein one of the two piston rods (43, 44) serves as an electric connecting unit (40) and at least one connecting cable (41) is guided on the piston rod (43, 44).

6. The door component (50) according to any of the preceding claims, wherein at least one of the two piston rods (43, 44) is displaceably accommodated external of the cylinder unit (31) in a tube (46) equipped with at least one slot (42), and wherein the tube is in particular part of one of the connecting units.

7. The door component according to any of the preceding claims, wherein the damper device comprises at least one sensor device (12), and wherein part of the sensor device (12) is attached to the piston rod, and wherein the sensor device (12) in particular comprises a friction gear which allows to obtain a measure of a relative motion of the two connecting units (51, 52) relative to one another.

8. The door component according to any of the preceding claims, comprising the supporting structure (101) and/or the door (53) door component according to any of the preceding claims, wherein a position sensor (70) is attributed which senses a measure of a deviation (71) from a horizontal orientation of the vehicle (100), and wherein, in dependence on the deviation (71) from the horizontal orientation, the control device (4) controls the damping of the damper device (1).

9. The door component according to any of the preceding claims, wherein at least one load sensor (72) is attributed to capturing a load applied on the door (53), and/or wherein at least one near field sensor (73) is attributed to detecting obstacles (60) in the environment.

10. The door component according to any of the preceding claims, wherein the piston unit (30) is equipped with a first one-way valve (15), and wherein the two chambers (33, 34) are interconnected to form a one-way circuit through an external feedback channel (35) equipped with at least one controllable, magnetorheological damping valve (5), so that the magnetorheological fluid (6) flows through the piston unit (30) in the same flow directions both when the piston unit (30) retracts and when it extends, and wherein an equalizing volume (36) is provided in particular on the low pressure side of the damping valve (5).

11. The door component (50) according to the preceding claim,
wherein a first chamber (33) of the two chambers (33, 34) is connected with the damping valve (5), and wherein the damping valve (5) is connected with the second chamber (34) via a second one-way valve (16), and wherein in particular the equalizing volume (36) is connected with the damping valve (5) and the second chamber (34).

12. Damper device (1) comprising a magnetorheological fluid (6) as the working fluid, comprising two connecting units (51, 52) movable relative to one another, wherein the relative motions of the two connecting units (51, 52) relative to one another can be controlled to be damped,
further comprising a piston unit (30) and a cylinder unit (31) surrounding the piston unit (30), wherein the piston unit (30) subdivides the cylinder volume (32) in two chambers (33, 34), wherein the piston unit (31) includes a first piston rod (43) extending through the first chamber (33) and a second piston rod (44) extending through the second chamber (34),
**characterized in**
**that** the damper device (1) comprises at least one equalizing device (39) with an automatic lock valve (65).

13. The damper device (1) according to the preceding claim, wherein the piston unit comprises a magnetorheological damping valve with at least one flow duct, and/or wherein an equalizing chamber of the equalizing device is configured inside the piston rod.

14. The damper device (1) according to any of the two preceding claims, wherein a dividing piston of the equalizing device is disposed inside the piston rod.

15. The damper device (1) according to any of the three preceding claims, wherein the lock valve in particular comprises a lock piston inside the piston rod, and wherein in particular the lock piston is biased to an open position by a biasing device.

## Revendications

1. Composante de porte (50) dotée d'au moins un dispositif d'amortissement (1) réglable et contenant un fluide magnétorhéologique (6) en tant que fluide de travail, comprenant deux unités de raccordement (51, 52) déplaçables l'une par rapport à l'autre, l'une des deux unités de raccordement (51, 52) pouvant être connectée à une construction porteuse et l'autre des deux unités de raccordement (51, 52) à un système de porte déplaçable (53), notamment d'un véhicule (100), pour amortir de manière contrôlée un mouvement dudit système de porte (53) au moins partiellement entre une position fermée (2) et une position ouverte (3),
ledit dispositif d'amortissement magnétorhéologique (1) comprenant une unité piston (30) et une unité cylindre (31) entourant ladite unité piston (30), ladite unité piston (30) divisant un volume de cylindre (32) en deux cellules (33, 34), ladite unité piston (31) présentant une première tige de piston (43) s'étendant au travers de la première cellule (33) et une deuxième tige de piston (44) s'étendant au travers de la deuxième cellule (34),
**caractérisée en ce**
**que** ledit dispositif d'amortissement (1) comprend au moins un dispositif de compensation (39) doté d'une soupape de fermeture (65) automatique.

2. Composante de porte (50) selon la revendication précédente, lesdites deux tiges de piston (43, 44) étant chacune guidées vers l'extérieur en sortant du volume de cylindre (32) et/ou de l'unité cylindre (31), et/ou une desdites tiges de piston (43, 44) est conçue télescopique et est fixée, d'un côté, au piston (38) et solidarisée de manière fixe, de l'autre côté, à l'unité cylindre (31), et/ou les première et deuxième tiges de piston (43, 44) présentent chacune le même diamètre (45).

3. Composante de porte (50) selon l'une quelconque des revendications précédentes, le dispositif d'amortissement (1) comprenant une soupape d'amortissement (5) réglable doté d'un canal d'écoulement (7) dans lequel peut s'écouler un liquide magnéto-rhéologique (6), ledit canal d'écoulement (7) pouvant être soumis à un champ magnétique (8) modifiable, de sorte que la résistance au flux exercée par le canal d'écoulement (7) et, par conséquent, un amortissement exercé par le système d'amortissement (1) pouvant être influencé par le biais dudit champ magnétique (8) dans ledit canal d'écoulement (7).

4. Composante de porte (50) selon la revendication précédente, le dispositif de compensation (39) comprenant un volume de compensation comprimable (36) et ledit volume de compensation dudit dispositif de compensation étant de préférence plus petit que le volume de la première tige de piston (43) et/ou de la deuxième tige de piston (44) au sein de l'unité cylindre (31).

5. Composante de porte (50) selon l'une quelconque des revendications précédentes, l'une des deux tiges de piston (43, 44) servant d'unité de raccordement électrique (40) et au moins un câble de raccordement (41) se trouvant au niveau de la tige de piston (43, 44).

6. Composante de porte (50) selon l'une quelconque des revendications précédentes, au moins une des deux tiges de piston (43, 44) à l'extérieur de l'unité cylindre (31) étant logée coulissante dans un tuyau (46) équipé d'au moins une fente (42), et notamment ledit tuyau faisant partie de l'une des unités de raccordement.

7. Composante de porte selon l'une quelconque des revendications précédentes, le dispositif d'amortissement comprenant au moins un système capteur (12) et une partie dudit système capteur (12) étant fixé à la tige de piston, et ledit système capteur (12) comprenant notamment une roue de friction permettant de prendre une mesure d'un mouvement relatif des deux unités de raccordement (51, 52) l'une par rapport à l'autre.

8. Composante de porte (50) selon l'une quelconque des revendications précédentes, comprenant ladite construction porteuse (101) et /ou ladite porte (53)
Composante de porte selon l'une quelconque des revendications précédentes, un capteur de position (70) qui prend une mesure d'un écart (71) d'une orientation horizontale du véhicule (100) étant associé, et le dispositif de commande (4) contrôlant l'amortissement exercé par le dispositif d'amortissement (1) en fonction dudit écart (71) de l'orientation horizontale.

9. Composante de porte selon l'une quelconque des revendications précédentes, au moins un capteur de charge (72) étant associé pour détecter une charge appliquée à la porte (53) et/ou au moins un capteur de champ de proximité (73) étant associé pour reconnaître des obstacles (60) dans les alentours.

10. Composante de porte (50) selon l'une quelconque des revendications précédentes, l'unité à piston (30) étant équipée d'au moins une première vanne anti-retour (15), et les deux cellules (33, 34) étant reliées l'une à l'autre en guise de circuit de retour, par le biais d'un canal de retour (35) externe équipé d'au moins une soupape d'amortissement magnétorhéologique (5) réglable, de sorte que le fluide magnétorhéologique (6) s'écoule, lorsque l'unité de piston (30) entre et ressort, dans le même sens de flux au travers de l'unité de piston (30), et un volume de compensation (36) étant prévu notamment sur une partie basse pression de la soupape d'amortissement (5).

11. Composante de porte (50) selon la revendication précédente, une première cellule (33) des deux cellules (33, 34) étant reliée à la soupape d'amortissement (5) et ladite soupape d'amortissement (5) étant reliée à la deuxième cellule (34) par une deuxième vanne anti-retour (16), et notamment le volume de compensation (36) étant relié à la soupape d'amortissement (5) et à la deuxième cellule (34).

12. Dispositif d'amortissement (1) doté d'un fluide magnétorhéologique (6) en tant que fluide de travail, comprenant deux unités de raccordement (51, 52) déplaçables l'une par rapport à l'autre, un mouvement relatif des deux unités de raccordement (51, 52) l'une par rapport à l'autre pouvant être amorti de manière contrôlée,
comprenant en outre une unité piston (30) et une unité cylindre (31) entourant ladite unité piston (30), ladite unité piston (30) divisant un volume de cylindre (32) en deux cellules (33, 34),
ladite unité à piston (31) présentant une première tige de piston (43) s'étendant au travers de la première cellule (33) et une deuxième tige de piston (44) s'étendant au travers de la deuxième cellule (34),
**caractérisé en ce**
**que** le dispositif d'amortissement (1) comprend au moins un dispositif de compensation (39) doté d'une soupape de fermeture (65) automatique.

13. Dispositif d'amortissement (1) selon la revendication précédente, l'unité piston présentant une soupape d'amortissement magnétorhéologique dotée d'au moins un canal d'écoulement et/ou une cellule de compensation du dispositif de compensation étant conçue au sein de la tige de piston.

14. Dispositif d'amortissement (1) selon l'une quelconque des deux revendications précédentes, un piston séparateur du dispositif de compensation étant agencé au sein de la tige de piston.

15. Dispositif d'amortissement (1) selon l'une quelconque des trois revendications précédentes, la soupape de fermeture comprenant notamment un piston de fermeture au sein de la tige de piston, et notamment ledit piston de fermeture étant précontraint dans une position ouverte par un dispositif de précontrainte.
